(19) **Europäisches Patentamt**
**European Patent Office**
**Office européen des brevets**

(11) **EP 4 030 340 B1**

(12) **EUROPÄISCHE PATENTSCHRIFT**

(45) Veröffentlichungstag und Bekanntmachung des Hinweises auf die Patenterteilung:
**01.11.2023 Patentblatt 2023/44**

(21) Anmeldenummer: **21152396.4**

(22) Anmeldetag: **19.01.2021**

(51) Internationale Patentklassifikation (IPC):
**G06F 18/2413** (2023.01)   **G06V 10/44** (2022.01)
**G06V 20/69** (2022.01)

(52) Gemeinsame Patentklassifikation (CPC):
**G06V 20/698; G06F 18/2414; G06V 10/44;**
G06V 2201/03

(54) **VERFAHREN ZUR DETEKTION VON PRÄSENZEN UNTERSCHIEDLICHER ANTINUKLEÄRER ANTIKÖRPER-FLUORESZENZMUSTERTYPEN OHNE GEGENFÄRBUNG UND VORRICHTUNG HIERFÜR**

METHOD FOR DETECTION OF PRESENCE OF DIFFERENT ANTINUCLEAR ANTIBODY FLUORESCENCE PATTERN TYPES WITHOUT COUNTER STAINING AND DEVICE FOR SAME

PROCÉDÉ DE DÉTECTION DES PRÉSENCES DE DIFFÉRENTS TYPES DE MOTIFS FLUORESCENTS ANTINUCLÉAIRES D'ANTICORPS SANS CONTRE-MARQUAGE ET DISPOSITIF ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.07.2022 Patentblatt 2022/29**

(73) Patentinhaber: **EUROIMMUN Medizinische Labordiagnostika AG**
**23560 Lübeck (DE)**

(72) Erfinder:
• **KRAUSE, Christopher**
**21514 Büchen (DE)**
• **KRAUTH, Jens**
**23552 Lübeck (DE)**
• **GERLACH, Stefan**
**23627 Groß Grönau (DE)**
• **MARZAHL, Christian**
**91052 Erlangen (DE)**
• **HAHN, Melanie**
**23617 Stockelsdorf (DE)**
• **VOIGT, Jörn**
**23558 Lübeck (DE)**

(56) Entgegenhaltungen:
• **GUPTA KRATI ET AL: "A CNN Based HEp-2 Specimen Image Segmentation and Identification of Mitotic Spindle Type Specimens", 22. August 2019 (2019-08-22), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 564 - 575, XP047517728, ISBN: 978-3-319-10403-4 [gefunden am 2019-08-22] * Zusammenfassung * * Abschnitte 1 und 2.2 ***
• **CASCIO DONATO ET AL: "Deep CNN for IIF Images Classification in Autoimmune Diagnostics", APPLIED SCIENCES, Bd. 9, Nr. 8, 18. April 2019 (2019-04-18), Seite 1618, XP055802263, DOI: 10.3390/app9081618**
• **FOGGIA PASQUALE ET AL: "Benchmarking HEp-2 Cells Classification Methods", IEEE TRANSACTIONS ON MEDICAL IMAGING, IEEE SERVICE CENTER, PISCATAWAY, NJ, US, Bd. 32, Nr. 10, 1. Oktober 2013 (2013-10-01), Seiten 1878-1889, XP011528121, ISSN: 0278-0062, DOI: 10.1109/TMI.2013.2268163 [gefunden am 2013-09-27]**

• BAYRAMOGLU NESLIHAN ET AL: "Human Epithelial Type 2 cell classification with convolutional neural networks", 2015 IEEE 15TH INTERNATIONAL CONFERENCE ON BIOINFORMATICS AND BIOENGINEERING (BIBE), IEEE, 2. November 2015 (2015-11-02), Seiten 1-6, XP032839513, DOI: 10.1109/BIBE.2015.7367705 [gefunden am 2015-12-28]

• BAYRAMOGLU NESLIHAN ET AL: "Human Epithelial Type 2 cell classification with convolutional neural networks", 2015 IEEE 15TH INTERNATIONAL CONFERENCE ON BIOINFORMATICS AND BIOENGINEERING (BIBE), IEEE, 2. November 2015 (2015-11-02),

**Beschreibung**

Die Erfindung betrifft ein Verfahren sowie eine Vorrichtung zur Detektion jeweiliger potentieller Präsenzen jeweiliger unterschiedlicher zellulärer Fluoreszenzmustertypen auf einem biologischen Zellsubstrat aufweisend humane Epitheliomzellen (HEp-Zellen), wobei die Fluoreszenzmustertypen unterschiedliche antinukleäre Antikörper-Fluoreszenzmustertypen umfassen. Die Erfindung betrifft ferner ein Verfahren zur Detektion potentieller Präsenzen unterschiedlicher zellulärer Fluoreszenzmustertypen auf einem biologischen Zellsubstrat aufweisend humane Epitheliomzellen mittels digitaler Bildverarbeitung sowie eine Recheneinheit, eine Datennetzwerkvorrichtung, ein Computerprogrammprodukt als auch ein Datenträgersignal hierfür.

Für die Zwecke medizinischer Diagnostik und insbesondere zum Zwecke einer Detektion von Autoantikörpern in einer flüssigen Patientenprobe wie beispielsweise Blut oder Blutserum ist es eine bekannte Methode, ein biologisches Substrat, welches humane Epitheliomzellen aufweist, mit der flüssigen Patientenprobe oder aber der verdünnten flüssigen Patientenprobe zu inkubieren. Abhängig von einem Vorhandensein bestimmter primärer Autoantikörper in der Patientenprobe ergibt sich eine Bindung dieser primären Antikörper in unterschiedlichen Bereichen der genannten Zellen. Es wird dann ferner das biologische Zellsubstrat mit sekundären Antikörpern inkubiert, welche mit einem sogenannten Fluoreszenzfarbstoff markiert sind. Solche sekundären Antikörper können an die primären Antikörper, welche auf dem Zellsubstrat gebunden sind, wiederum anbinden. Nach einem Bestrahlen des Substrates mit einer Anregungsstrahlung ergibt sich dann eine Fluoreszenz des erwähnten Fluoreszenzfarbstoffes, sodass in einem entsprechenden Fluoreszenzbild dann die primären Antikörper der Patientenprobe, welche an die Zellen des Zellsubstrats gebunden sind und an welche wiederum sekundäre Antikörper mit dem Fluoreszenzfarbstoff gebunden sind, als ein Fluoreszenzmuster lokalisiert werden können. Abhängig von einer Erkrankung des Patienten bzw. einem Vorhandensein spezifischer primärer Antikörper in der Patientenprobe ergeben sich unterschiedliche spezifische Fluoreszenzmuster. Bei einer solchen Detektion von primären Antikörpern als sogenannte Autoantikörper, welche sich gegen die Zellkerne bzw. die Antigene des Zellkerns richten, ergeben sich also hierbei sogenannte antinukleäre Antikörper-Fluoreszenzmuster. Diese nennt man auch sogenannte ANA-Fluoreszenzmuster oder ein ANA-Muster.

Bei der Bezeichnung solcher Autoantigene hat man sich entweder nach biochemischen Merkmalen gerichtet (DNS, Histone, Ribonuclioproteine: RNP), oder nach mit den Autoantikörpern assoziierten Krankheiten.

Im Zuge der indirekten Immunfluoreszenz (IIFT) mit humanen Epithelzellen bzw. humanen Epitheliomzellen stellt sich also die Aufgabe, die sich ergebenden unterschiedlichen Fluoreszenzmustertypen zu erkennen und zu klassifizieren. Hierbei muss nicht unbedingt ein einzelnes Muster alleine für sich in einem Fluoreszenzbild präsent sein, sondern es können auch mehrere Muster gleichzeitig präsent sein.

Antikörper gegen nukleäre Antigene sind gegen verschiedene Zellkernbestandteile (biochemische Substanzen des Zellkerns) gerichtet. Diese umfassen die Nukleinsäuren, Zellkernproteine und Ribonuclioproteine.

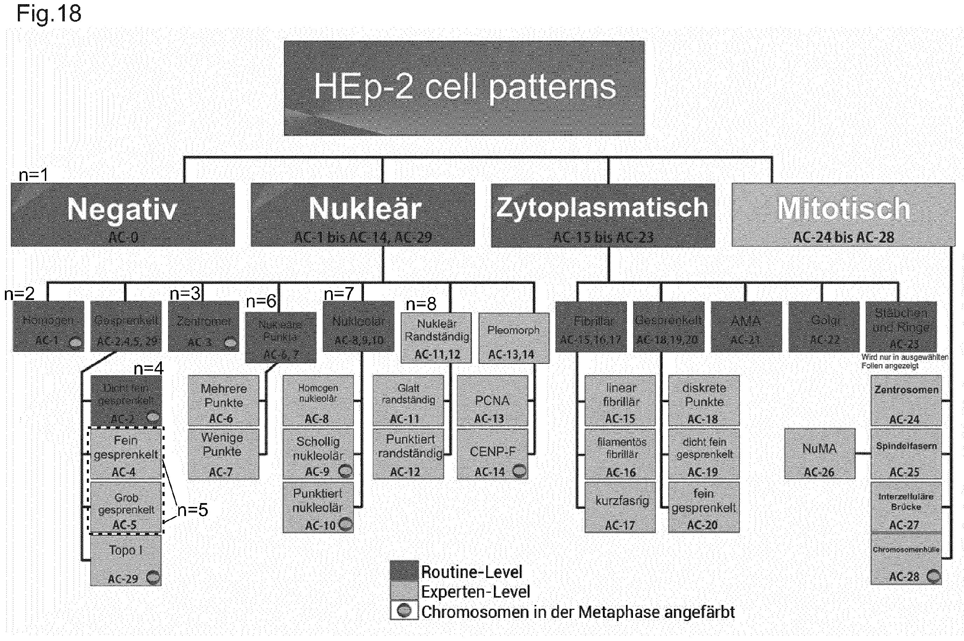

Die unterschiedlichen sich ergebenden antinukleären Antikörper-Fluoreszenzmustertypen werden in unterschiedliche Mustertypen unterschieden. Ein Ansatz hierzu findet sich auf der Internetseite www.anapatterns.org, auf welcher unter anderem unterschiedliche nukleäre Muster aufgeführt und unterschieden werden. Eine beispielhafte Klassifizierung gemäß dieses Schemas ist in der Figur 18 illustriert.

GUPTA KRATI ET AL: "A CNN Based HEp-2 Specimen Image Segmentation and Identification of Mitotic Spindle Type Specimens", 22. August 2019 (2019-08-22), ADVANCES IN DATABASES AND INFORMATION SYSTEMS; [LECTURE NOTES IN COMPUTER SCIENCE; SPRINGER INTERNATIONAL PUBLISHING offenbart ein Verfahren zur Detektion jeweiliger potentieller Präsenzen jeweiliger unterschiedlicher zellulärer Fluoreszenzmustertypen auf einem biologischen Zellsubstrat.

Aufgabe der vorliegenden Erfindung ist es, mittels digitaler Bildverarbeitung ein Verfahren bereitzustellen, welches automatisiert jeweilige potentielle Präsenzen jeweiliger unterschiedlicher antinukleärer Antikörper-Fluoreszenzmustertypen in einem Fluoreszenzbild detektiert.

Die erfindungsgemäße Aufgabe wird gelöst durch das vorgeschlagene Verfahren nach Anspruch 1, die vorgeschlagene Vorrichtung nach Anspruch 10, das vorgeschlagene Verfahren nach Anspruch 11, das vorgeschlagene Verfahren zur digitalen Bildverarbeitung nach Anspruch 12, die vorgeschlagene Recheneinheit nach Anspruch 13, die Datennetzwerkvorrichtung nach Anspruch 14, das vorgeschlagene Computerprogrammprodukt nach Anspruch 15 sowie das vorgeschlagene Datenträgersignal nach Anspruch 16.

Vorgeschlagen wird ein Verfahren zur Detektion jeweiliger potentieller Präsenzen jeweiliger unterschiedlicher zellulärer Fluoreszenzmustertypen auf einem biologischen Zellsubstrat aufweisend humane Epitheliomzellen, wobei die zellulären Fluoreszenzmustertypen mehrere unterschiedliche antinukleäre Antikörper-Fluoreszenzmustertypen umfassen. Das Verfahren weist unterschiedliche Schritte auf. Es erfolgt ein Inkubieren des Zellsubstrates mit einer flüssigen Patientenprobe, welche potentiell primäre Antikörper aufweist. Vorzugsweise ist die flüssige Patientenprobe verdünntes Patientenblut, besonders bevorzugt verdünntes Blutserum des Patienten. Das Zellsubstrat wird mit sekundären Antikörpern, welche mit einem Fluoreszenzfarbstoff markiert sind, inkubiert. Es erfolgt ferner vorzugsweise ein Bestrahlen des Zellsubstrates mit einer Anregungsstrahlung. Ferner erfolgt ein Erfassen eines Gesamtbildes, welches eine Färbung des Zellsubstrates durch den Fluoreszenzfarbstoff repräsentiert.

Es erfolgt ferner ein Bestimmen eines segmentierten Bildes mittels Segmentieren des Gesamtbildes, vorzugsweise mittels eines separaten und vortrainierten Convolutional Neural Network für diese Segmentierung. Insbesondere weist das segmentierte Bild wenigstens eine Segmentklasse auf, welche eine valide Mitosezelle repräsentiert, bevorzugt eine Mitosezelle in einem Stadium der Metaphase, besonders bevorzugt eine Metaphasenplatte einer Mitosezelle in einem Stadium der Metaphase.

Es erfolgt in dem erfindungsgemäßen Verfahren ferner ein Detektieren jeweiliger Bildsegmente in dem segmentierten Bild, welche jeweils eine mitotische Zelle repräsentieren. Vorzugsweise indiziert ein solches Bildsegment eine mitotische Zelle bzw. eine Mitosezelle. Besonders bevorzugt indiziert ein solches Bildsegment eine Mitosezelle in einem Stadium der sogenannten Metaphase. Ganz besonders bevorzugt indiziert ein solches Bildsegment eine Metaphasenplatte einer Mitosezelle in einem Stadium der sogenannten Metaphase. Dadurch, dass besonders bevorzugt ein solches Bildsegment eine Metaphasenplatte indiziert, können besonders gut Mitosezellen in dem Stadium der Metaphase detektiert werden.

Es erfolgt dann ferner ein Selektieren von Teilbildern des Gesamtbildes, welche jeweils wenigstens eine mitotische Zelle aufweisen, insbesondere eine valide mitotische Zelle, und dazu korrespondierenden Teilbildern des segmentierten Bildes auf Basis der detektierten Bildsegmente. Schließlich erfolgt ferner ein Detektieren jeweiliger tatsächlicher Präsenzen jeweiliger der zellulären Fluoreszenzmustertypen mittels eines vortrainierten Convolutional Neural Network auf Basis der selektierten Teilbilder des Gesamtbildes und der selektierten Teilbilder des segmentierten Bildes.

Das Convolutional Neural Network verarbeitet jeweils ein Tupel von Teilbildern gleichzeitig, wobei ein solches Tupel wenigstens ein selektiertes Teilbild des Gesamtbildes und ein dazu korrespondierendes selektiertes Teilbild des segmentierten Bildes aufweist.

Das Gesamtbild repräsentiert insbesondere eine Färbung des Zellsubstrates durch den Fluoreszenzfarbstoff in Form eines grün fluoreszierenden Farbstoffs.

Zur Erläuterung eines oder mehrerer möglicher Vorteile des erfindungsgemäßen Verfahrens erfolgen nun genauere Ausführungen.

Die sekundären Antikörper können an solche primären Antikörper binden, welche aus der flüssigen Patientenprobe stammen und an spezifische Bereiche des Zellsubstrates bzw. des Zellkerns gebunden sind, so dass abhängig von der Präsenz jeweiliger unterschiedlicher Typen von primären Antikörpern jeweilige unterschiedliche Antikörper-Fluoreszenzmuster in dem Gesamtbild vorliegen und dann erkannt werden können. Für eine Detektion von unterschiedlichen ANA-Mustern wäre es prinzipiell möglich, ein gesamtes Fluoreszenzbild bzw. das Gesamtbild mit einer großen Mehrzahl von humanen Epitheliomzellen (HEp-Zellen) durch ein Convolutional Neural Network zu analysieren und also für eine Erkennung der unterschiedlichen ANA-Muster dem Convolutional Neural Network ein solches gesamtes Fluoreszenzbild für das Detektieren der jeweiligen Präsenzen der jeweiligen Fluoreszenzmustertypen zuzuführen. Das Convolutional Neural Network (CNN) müsste dann die Gesamtheit aller HEp-Zellen des Bildes zusammen bzw. auf einmal auswerten, um die unterschiedlichen antinukleären Antikörper-Fluoreszenzmustertypen zu erkennen. Für eine genaue Detektion ist es zwar einerseits aus statistischen Gründen vorteilhaft, möglichst viele HEp-Zellen zu betrachten. Jedoch gibt es hierbei auch verschiedene Nachteile. Einerseits wäre ein Rechenaufwand zur Verarbeitung eines gesamten Fluoreszenzbildes mit einer großen Mehrzahl von HEp-Zellen sehr hoch. Ferner würde eine Verarbeitung eines solchen großen Gesamtbildes mit sehr vielen HEp-Zellen einen großen Freiheitsgrad an abstrakter Bildinformation darstellen. Würde das Convolutional Neural Network während einer Trainingsphase mit solchen großen gesamten Fluoreszenzbildern trainiert werden, so würde die Menge und die Varianz abstrakter Bildinformation möglicherweise zu groß sein, als dass das Convolutional Neural Network in der Trainingsphase hinreichend zu einem Zustand konvergieren könnte um eine sichere Detektion unterschiedlicher Fluoreszenzmustertypen bzw. Fluoreszenzmusterklassen zu ermöglichen.

Daher wird erfindungsgemäß vorgeschlagen, dass zunächst das Gesamtbild segmentiert wird, um ein segmentiertes Bild zu erhalten, da ein solches segmentiertes Bild generelle Lagen von Zellstrukturen bzw. generelle Zellbereiche in dem Gesamtbild darstellt bzw. indiziert. Auf Basis des segmentierten Bildes können dann zunächst bestimmte Bildsegmente detektiert werden, welche jeweils eine mitotische Zelle repräsentieren bzw. indizieren, vorzugsweise mitotische Zellen eines bestimmten Mitosestadiums. Besonders bevorzugt indiziert ein solches Bildsegment eine Mitosezelle in einem Stadium der sogenannten Metaphase. Ganz besonders bevorzugt indiziert ein solches Bildsegment eine Metaphasenplatte einer Mitosezelle in einem Stadium der sogenannten Metaphase.

Es können dann solche Teilbilder des segmentierten Bildes und des Gesamtbildes selektiert werden, welche jeweils wenigstens eine mitotische Zelle aufweisen, insbesondere jeweils wenigstens eine Mitosezelle in dem Stadium der Metaphase. Insbesondere sind hierbei die Bildsegmente in ihrer räumlichen Ausdehnung kleiner als die Teilbilder.

Hierdurch ergibt sich der Vorteil, dass das Convolutional Neural Network jeweils nur ein Teilbild des Gesamtbildes mit antikörperspezifischer Fluoreszenzfarbstoff-Färbung und das dazu korrespondierende Teilbild des segmentierten Bildes prozessieren muss und nicht das Gesamtbild auf einmal. Daher kann das Convolutional Neural Network auf eine Größe derartiger Teilbilder hin trainiert werden und muss nur solche Teilbilder mit einer begrenzten Anzahl von HEp-Zellen und somit nur eine begrenzte Menge an abstrakter Bildinformation auswerten.

In dem erfindungsgemäßen Verfahren verarbeitet das Convolutional Neural Network gemeinsam bzw. gleichzeitig das selektierte Teilbild des Gesamtbildes, welches eine patientenspezifische Färbung mit dem Fluoreszenzfarbstoff aufweist, und auch ein dazu korrespondierendes Teilbild des segmentierten Bildes, welches eine Darstellung des Zellsubstrates zur Hervorhebung genereller Zellstrukturen repräsentiert. Hierdurch kann das Convolutional Neural Network mittels des Teilbildes des segmentierten Bildes auf eine Lokalisationsinformation bezogen auf Zellbereiche bzw. Zellstrukturen abstellen, welche in dem segmentierten Teilbild indiziert sind, und gleichzeitig auch die tatsächlichen patientenspezifischen Fluoreszenzmuster in den Teilbildern des Gesamtbildes detektieren. Mit anderen Worten: Das Teilbild des segmentierten Bildes hilft dem Convolutional Neural Network, bei der Analyse des Teilbildes des Gesamtbildes auf für jeweilige Mustertypen jeweilige charakteristische Bereiche von Zellen bzw. Zellstrukturen abzustellen.

Bekannt sind aus dem Stand der Technik Verfahren, bei welchen eine Färbung des Zellsubstrates mit einem weiteren Fluoreszenzfarbstoff erfolgen kann, vorzugsweise mittels Propidiumjodid als Fluoreszenzfarbstoff bzw. Indikatorfarbstoff für eine Färbung in einem Rotkanal. Ein solcher Indikatorfarbstoff bindet unspezifisch von einer Präsenz von primären Antikörpern in einer Patientenprobe an zelluläre Bereiche an und erlaubt somit ein prinzipielles Erkennen bzw. Indizieren unterschiedlicher Zellbereiche in einem Fluoreszenzbild eines Rotkanals. Mit anderen Worten: Eine solche optionale und zusätzliche Färbung des Zellsubstrates in einem roten Farbkanal kann es ermöglichen, gröbere bzw. generelle zelluläre Bereiche bzw. zelluläre Strukturen sichtbar zu machen, so dass solche Strukturen dann in dem Rotkanalbild erkannt bzw. detektiert werden können.

Das hier vorgeschlagene Verfahren kommt jedoch ohne eine solche optionale, zusätzliche Färbung des Substrates durch einen Indikatorfarbstoff aus, sondern benötigt lediglich das eine Fluoreszenz-Gesamtbild des einen Fluoreszenzfarbstoffs, vorzugsweise eines grünen Fluoreszenzfarbstoffs, als Eingangsinformation, um jeweilige tatsächliche Präsenzen der jeweiligen zellulären Fluoreszenzmustertypen zu detektieren. In besonders vorteilhafter Weise verwendet das vorgeschlagene Verfahren anstelle eines Indikatorfarbstoff-Bildes bzw. eines Rotkanalbildes stattdessen eine andere Bildinformation, nämlich das aus dem patientenspezifisch gefärbte Gesamtbild abgeleitete segmentierte Bild und verwendet dann zueinander korrespondierende Teilbilder des Gesamtbildes und des segmentierten Bildes zur Detektion jeweiliger tatsächlicher Präsenzen jeweiliger der zellulären Fluoreszenzmustertypen mittels des Convolutional Neural Network.

Die Aufgabe, neben der Bildinformation des Gesamtbildes eine weitere Bildinformation mit generell angefärbten bzw. indizierten Zellstrukturen bereitzustellen, wurde im Stand der Technik eben durch die Notwendigkeit der Verwendung eines Indikatorfarbstoffes gelöst, wohingegen nun erfindungsgemäß stattdessen diese Notwendigkeit entfällt und das aus dem insbesondere grünen Gesamtbild abgeleitete segmentierte Bild verwendet wird.

Vorzugsweise erfolgt das Segmentieren des Gesamtbildes zur Bestimmung des segmentierten Bildes mittels eines von dem bisher genannten Convolutional Neural Network separaten Netzwerkes, insbesondere eines weiteren, separaten und vortrainierten Convolutional Neural Networks. Die Erfinder haben erkannt, dass die Verwendung eines separaten Convolutional Neural Networks für die Segmentierung anstelle klassischer Bildverarbeitungsverfahren, z.B. Schwellwertverfahren nach Otsu, deutlich verlässlichere Segmentierungsergebnisse erzielen können. Das musterspezifisch gefärbte Gesamtbild weist für einen sogenannten positiven Patienten mitunter zwei individuelle Färbungsmustertypen auf, wobei beispielsweise bis zu n=8 unterschiedliche Mustertypen infrage kommen können, was aber vor der Segmentierung nicht bekannt ist, so dass nicht feststeht, welche der n=8 potentiellen Mustertypen gerade in dem Gesamtbild präsent sind, so dass der Segmentierungs-Algorithmus generelle zelluläre Strukturen auch unabhängig von patientenspezifisch präsenten Mustertypen erkennen muss. Es sei ohne Beschränkung der Allgemeinheit einmal beispielsweise angenommen, dass es n=8 verschiedene Mustertypen gibt und dass in einem positiven Gesamtbild immer k=2 Mustertypen präsent sind, dann ergeben sich aus kombinatorischen Gründen

$$\binom{n}{k} = \frac{n!}{(n-k)!\,k!}$$

verschiedene Kombinationen, in diesem Fall mit n=8 und k=2 also 28 verschiedene patientenspezifische Musterfärbungen, die der Segmentierungsalgorithmus abfangen muss, um die generellen Zellstrukturen sicher aufzufinden. Dieses ist durch klassische Bildverarbeitungsalgorithmen mit üblicher Merkmalsextraktion nur schwer zu leisten, da zu extrahierende Merkmale individuell entworfen bzw. "designed" werden müssen und hier also 28 Musterkombinationen abfangen müssten. Dadurch, dass erfindungsgemäß für die Segmentierung das separate Convolutional Neural Network verwendet wird, kann das separate Convolutional Neural Network vorab mit unterschiedlichen Gesamtbildern der unterschiedlichen Mustertypkombinationen für die Aufgabe der Segmentierung des Gesamtbildes trainiert werden.

Vorteilhafte Ausführungsformen der Erfindung sind Gegenstand der abhängigen Ansprüche und werden in der folgenden Beschreibung unter teilweiser Bezugnahme auf die Figur näher erläutert.

Es werden solche Bildsegmente detektiert, welche in dem segmentierten Bild jeweils eine valide mitotische Zelle dadurch repräsentieren, dass diese jeweiligen Bildsegmente jeweilige Metaphasenplatten jeweiliger Mitosezellen in einem Stadium der Metaphase indizieren.

Vorzugsweise weist das Verfahren ferner auf: Detektieren jeweiliger Bildsegmente, welche jeweils eine mitotische Zelle einer hinreichenden Qualität repräsentieren, in dem Gesamtbild auf Basis des segmentierten Bildes, Selektieren von Teilbildern des Gesamtbildes und dazu korrespondierenden Teilbildern des segmentierten Bildes auf Basis der detektierten Bildsegmente, welche jeweils wenigstens eine mitotische Zelle einer hinreichenden Qualität repräsentieren.

Vorzugsweise weist das Verfahren ferner auf: Bestimmen jeweiliger Konfidenzmaße für die jeweiligen tatsächlichen Präsenzen der jeweiligen Fluoreszenzmustertypen mittels des Convolutional Neural Network auf Basis der selektierten Teilbilder des Gesamtbildes und der selektierten Teilbilder des segmentierten Bildes.

Vorzugsweise weist das Convolutional Neural Network ein Ausgabe-Layer auf, welches für einen jeweiligen zellulären Fluoreszenzmustertypen eine jeweilige Feature-Map generiert, wobei das Convolutional Neural Network ein jeweiliges Konfidenzmaß auf Basis einer jeweiligen Feature-Map bestimmt.

Vorzugsweise weist das Verfahren ferner auf: Segmentieren des Gesamtbildes in Bildsegmente unterschiedlicher Segmentklassen, Bestimmen wenigstens eines Helligkeitswertes für wenigstens einen Fluoreszenzmustertypen basierend auf einem oder mehreren Bildsegmenten wenigstens einer bestimmten Segmentklasse und Verifizieren des Konfidenzmaßes des wenigstens einen Fluoreszenzmustertypen auf Basis des Helligkeitswertes des wenigstens einen Fluoreszenzmustertypen.

Vorzugsweise erfolgt das Verifizieren des Konfidenzmaßes auf Basis des Helligkeitswertes und in Abhängigkeit eines durch einen Nutzer vorgebbaren Schwellenwertes.

Vorzugsweise weist das Verfahren ferner auf, für ein jeweiliges Teilbild-Tupel, welches ein Teilbild des Gesamtbildes und ein korrespondierendes Teilbild des segmentierten Bildes aufweist, Bestimmen jeweiliger Teilbild-Konfidenzmaße für jeweilige tatsächliche Teilbild-Präsenzen jeweiliger zellulärer Fluoreszenzmustertypen mittels des Convolutional Neural Network und Bestimmen der jeweiligen Konfidenzmaße für die jeweiligen tatsächlichen Präsenzen der jeweiligen Fluoreszenzmustertypen auf Basis der Teilbild-Konfidenzmaße.

Vorzugsweise weist das Verfahren ferner auf: Aufteilen des Gesamtbildes in eine Menge von Teilbildern nach einem vorgegebenen Aufteilungsschema, Selektieren von Teilbildern des Gesamtbildes auf Basis der detektierten Bildsegmente und Selektieren von dazu korrespondierenden Teilbildern des segmentierten Bildes und Detektieren jeweiliger tatsächlicher Präsenzen jeweiliger der zellulären Fluoreszenzmustertypen mittels des Convolutional Neural Network auf Basis der selektierten Teilbilder des Gesamtbildes und auf Basis der selektierten Teilbilder des segmentierten Bildes.

Vorgeschlagen wird ferner eine erfindungsgemäße Vorrichtung zur Detektion jeweiliger potentieller Präsenzen jeweiliger unterschiedlicher zellulärer Fluoreszenzmustertypen auf einem biologischen Zellsubstrat aufweisend humane Epitheliomzellen mittels digitaler Bildverarbeitung. Die Vorrichtung weist auf: eine Haltevorrichtung für das biologische Substrat, welches mit einer flüssigen Patientenprobe, welche potentiell primäre Antikörper aufweist, ferner mit sekundären Antikörpern, welche mit einem Fluoreszenzfarbstoff markiert sind, inkubiert wurde. Die Vorrichtung weist ferner auf wenigstens eine Bilderfassungseinheit zum Erfassen eines Gesamtbildes, welches eine Färbung des Zellsubstrates durch den Fluoreszenzfarbstoff repräsentiert. Die Vorrichtung ist gekennzeichnet durch wenigstens eine Recheneinheit, welche ausgebildet ist, mittels Segmentieren des Gesamtbildes ein segmentiertes Bild zu bestimmen, in dem segmentierten Bild jeweilige Bildsegmente zu detektieren, welche jeweils eine mitotische Zelle repräsentieren, Teilbilder des Gesamtbildes, welche jeweils wenigstens eine mitotische Zelle aufweisen, und dazu korrespondierende Teilbilder des segmentierten Bildes auf Basis der detektierten Bildsegmente zu selektieren und auf Basis der selektierten Teilbilder des Gesamtbildes und der selektierten Teilbilder des segmentierten Bildes jeweilige tatsächliche Präsenzen jeweiliger der zellulären Fluoreszenzmustertypen mittels eines Convolutional Neural Network zu detektieren.

Vorgeschlagen wird ferner ein Verfahren zur Detektion jeweiliger potentieller Präsenzen jeweiliger unterschiedlicher zellulärer Fluoreszenzmustertypen auf einem biologischen Zellsubstrat aufweisend humane Epitheliomzellen mittels digitaler Bildverarbeitung. Das Verfahren weist auf: Erfassen eines Gesamtbildes, welches eine Färbung des Zellsubstrates durch den Fluoreszenzfarbstoff repräsentiert, Bestimmen eines segmentierten Bildes mittels Segmentieren des Gesamtbildes, Detektieren jeweiliger Bildsegmente in dem segmentierten Bild, welche jeweils eine mitotische Zelle repräsentieren, Selektieren von Teilbildern des Gesamtbildes, welche jeweils wenigstens eine mitotische Zelle aufweisen, und dazu korrespondierenden Teilbildern des segmentierten Bildes auf Basis der detektierten Bildsegmente und Detektieren jeweiliger tatsächlicher Präsenzen jeweiliger der zellulären Fluoreszenzmustertypen mittels eines Convolutional Neural Network auf Basis der selektierten Teilbilder des Gesamtbildes und der selektierten Teilbilder des segmentierten Bildes.

Vorgeschlagen wird ferner ein Verfahren zur digitalen Bildverarbeitung. Das Verfahren weist auf: Entgegennehmen eines Gesamtbildes, welches eine Färbung eines biologischen Zellsubstrates durch einen Fluoreszenzfarbstoff repräsentiert, wobei das biologische Zellsubstrat humane Epitheliomzellen aufweist, Bestimmen eines segmentierten Bildes mittels Segmentieren des Gesamtbildes, Detektieren jeweiliger Bildsegmente in dem segmentierten Bild, welche jeweils eine mitotische Zelle repräsentieren, Selektieren von Teilbildern des Gesamtbildes, welche jeweils wenigstens eine mitotische Zelle aufweisen, und dazu korrespondierenden Teilbildern des segmentierten Bildes auf Basis der detektierten Bildsegmente und Detektieren jeweiliger tatsächlicher Präsenzen jeweiliger der zellulären Fluoreszenzmustertypen mittels eines Convolutional Neural Network auf Basis der selek-tierten Teilbilder des Gesamtbildes und der selektierten Teilbilder des segmentierten Bildes.

Vorgeschlagen wird ferner eine Recheneinheit, welche ausgebildet ist im Zuge einer digitalen Bildverarbeitung ein Gesamtbild entgegenzunehmen, welches eine Färbung eines biologischen Zellsubstrates durch einen Fluoreszenzfarbstoff repräsentiert, wobei das biologische Zellsubstrat humane Epitheliomzellen aufweist, mittels Segmentieren des Gesamtbildes ein segmentiertes Bild zu bestimmen, in dem segmentierten Bild jeweilige Bildsegmente zu detektieren, welche jeweils eine mitotische Zelle repräsentieren, Teilbilder des Gesamtbildes, welche jeweils wenigstens eine mitotische Zelle aufweisen, und dazu korrespondierende Teilbilder des segmentierten Bildes auf Basis der detektierten Bildsegmente zu selektieren und auf Basis der selektierten Teilbilder des Gesamtbildes und der selektierten Teilbilder des segmentierten Bildes jeweilige tatsächliche Präsenzen jeweiliger der zellulären Fluoreszenzmustertypen mittels eines Convolutional Neural Network (CNN2) zu detektieren.

Vorgeschlagen wird ferner eine Datennetzwerkvorrichtung, aufweisend wenigstens eine Datenschnittstelle zum Entgegennehmen eines Gesamtbildes, welches eine Färbung eines biologischen Zellsubstrates durch einen Fluoreszenzfarbstoff repräsentiert, wobei das biologische Zellsubstrat humane Epitheliomzellen aufweist, sowie eine zuvor beschriebene erfindungsgemäße Recheneinheit.

Vorgeschlagen wird ferner ein Computerprogrammprodukt, welches Befehle umfasst, die bei der Ausführung des Programms durch einen Computer diesen veranlassen, das erfindungsgemäße Verfahren zur digitalen Bildverarbeitung durchzuführen.

Vorgeschlagen wird ferner ein Datenträgersignal, welches das Computerprogrammprodukt überträgt.

Im Folgenden wird die Erfindung anhand spezieller Ausführungsformen ohne Beschränkung des allgemeinen Erfindungsgedankens anhand der Figuren näher erläutert.

Figur 1 Schritte des erfindungsgemäßen Verfahrens gemäß einer bevorzugten Ausführungsform,

Figur 2 eine Prozessierung von Teilbildern durch ein Convolutional Neural Network gemäß einer bevorzugten Ausführungsform,

Figur 3 eine Prozessierung mehrerer Teilbilder durch ein Convolutional Neural Network gemäß einer bevorzugten Ausführungsform,

Figur 4 Schritte für ein Verifizieren von Konfidenzmaßen auf Basis von ermittelten Helligkeitswerten gemäß einer bevorzugten Ausführungsform,

Figur 5 detaillierte Schritte eines Verfahrens für ein Segmentieren des Gesamtbildes gemäß einer bevorzugten Ausführungsform,

Figur 6 eine vorgeschlagene Vorrichtung gemäß einer bevorzugten Ausführungsform,

Figur 7A eine vorgeschlagene Recheneinheit gemäß einer bevorzugten Ausführungsform,

Figur 7B eine vorgeschlagene Datennetzwerkvorrichtung gemäß einer bevorzugten Ausführungsform,

Figur 7C ein vorgeschlagenes Computerprogrammprodukt sowie ein Datenträgersignal gemäß einer bevorzugten Ausführungsform,

Figur 8 ein Gesamtbild bzw. ein gesamtes Fluoreszenzbild,

Figur 9 unterschiedliche beispielhafte anti-nukleäre Antikörper-Fluoreszenzmustertypen,

Figur 10a ein segmentiertes Gesamtbild,

Figur 10b eine Legende zu Figur 10a,

Figur 11 eine Aufteilung des Gesamtbildes in Teilbilder sowie eine Hervorhebung unterschiedlicher Mitosezellen,

Figur 12 ein Teilbild des Gesamtbildes und ein dazu korrespondierendes Teilbild des segmentierten Bildes,

Figur 13 unterschiedliche Featuremaps für unterschiedliche Fluoreszenzmustertypen bzw. Fluoreszenzmusterklassen bezogen auf das Teilbild aus Figur 12,

Figur 14a das Teilbild des Gesamtbildes aus Figur 12,

Figur 14b eine Featuremap eines bestimmten Fluoreszenzmustertypen wie auch ein zugehöriges Überlagerungsbild für das Teilbild aus Figur 14a,

Figur 14c eine Featuremap für einen anderen bestimmten Fluoreszenzmustertypen als auch ein zugehöriges Überlagerungsbild für das Teilbild aus Figur 14a,

Figur 15a ein erstes weiteres Fluoreszenzbild,

Figur 15b eine hervorgehobene Interphase-Zelle als auch eine hervorgehobene Mitosezelle zu dem Fluoreszenzbild aus Figur 15a,

Figur 16 ein zweites weiteres Fluoreszenzmusterbild,

Figur 17a eine hervorgehobene Interphase-Zelle zu dem Fluoreszenzmusterbild aus Figur 16,

Figur 17b eine hervorgehobene Mitosezelle zu dem Fluoreszenzmusterbild aus Figur 16,

Figur 18 ein Klassifikationsschema für unterschiedliche Fluoreszenzmustertypen,

Figur 19 ein Layer eines Convolutional Neural Network zur Erkennung von Fluoreszenzmustertypen gemäß einer bevorzugten Ausführungsform,

Figur 20 ein Convolutional Neural Network für eine Bildsegmentierung gemäß einer bevorzugten Ausführungsform,

Figur 21a ein Fluoreszenzbild mit validen Mitosezellen,

Figur 21b ein Segmentierungsergebnis zu dem Fluoreszenzbild aus Figur 21a,

Figur 22 Experimentalergebnisse eines Beispiels.

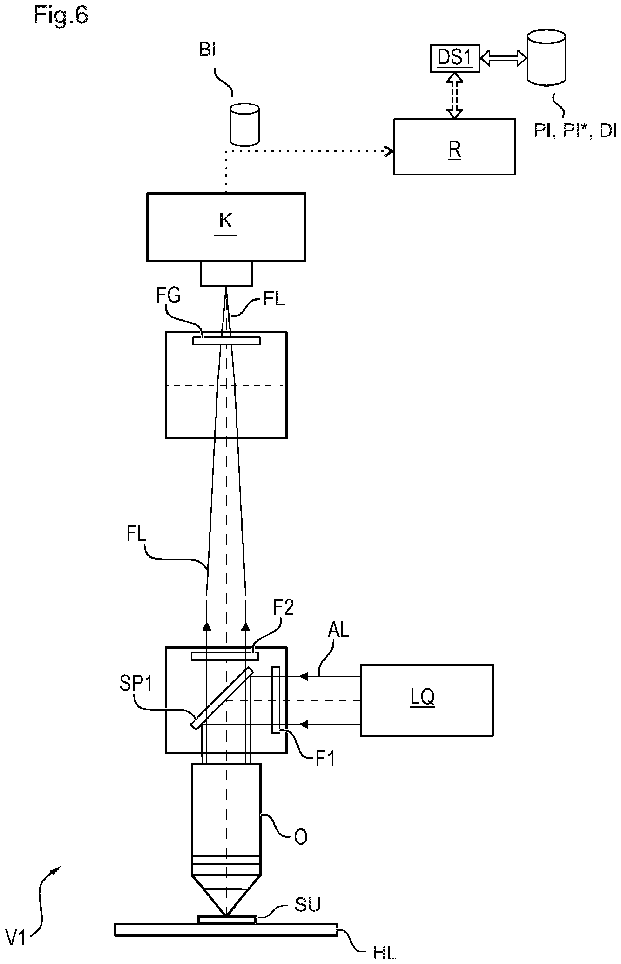

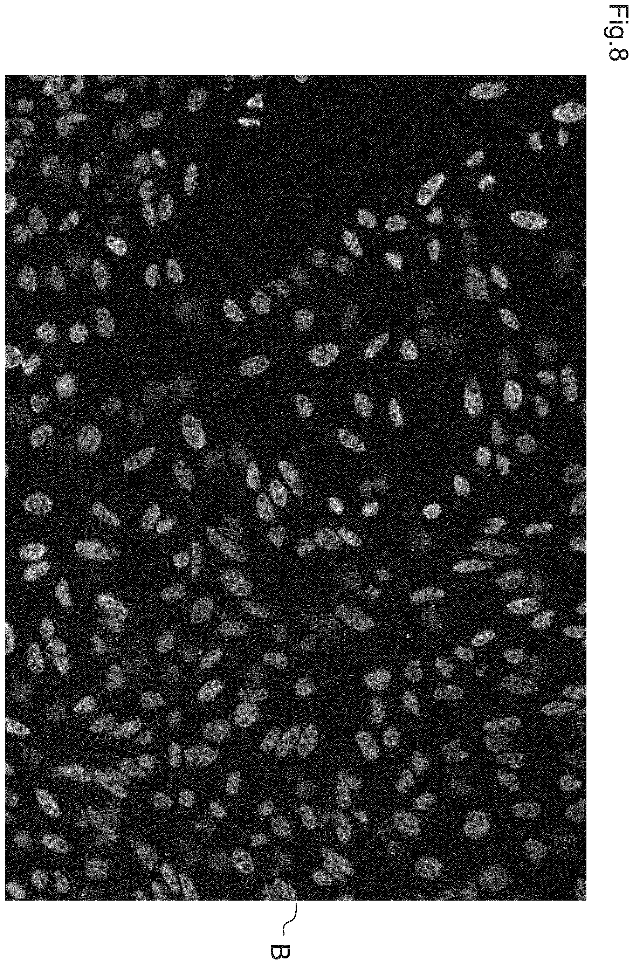

Die Figur 8 zeigt ein Gesamtbild bzw. ein Fluoreszenzmusterbild B, welches eine Graufärbung aufweist, die eine Färbung eines Zellsubstrates in einem sogenannten Grünkanal durch einen Fluoreszenzfarbstoff repräsentiert.
Aufgrund einer Inkubation des hier dargestellten Zellsubstrates mit einem verdünnten patientenspezifischen Blutserum und dadurch resultierender Bindung primärer Autoantikörper ergibt sich aufgrund einer weiteren Inkubation des Zellsubstrates mit sekundären Antikörpern, welche mit dem Fluoreszenzfarbstoff markiert sind, eine Färbung in einem Grünkanal. Der Fluoreszenzfarbstoff ist vorzugsweise Fluoresceinisothiocyanat (FITC).
Es erlaubt eine differenzierte musterartige Färbung von Zellbereichen in dem Bild B eine differenzierte Erkennung einer Präsenz von anti-nukleären Fluoreszenzmustertypen. In dem Bild B aus der Figur 8 muss nicht unbedingt nur ein einzelnes gefärbtes Muster bzw. ein einzelnes antinukleäres Antikörper-Fluoreszenzmuster eines bestimmten Mustertyps vorhanden sei, es können auch mehrere solcher antinukleären Antikörper-Fluoreszenzmustertypen gleichzeitig auftreten.
Das Bild B kann mittels einer Bilderfassungseinheit in Form von einer Kamera K einer Vorrichtung V1 aus Figur 6 erfasst werden.

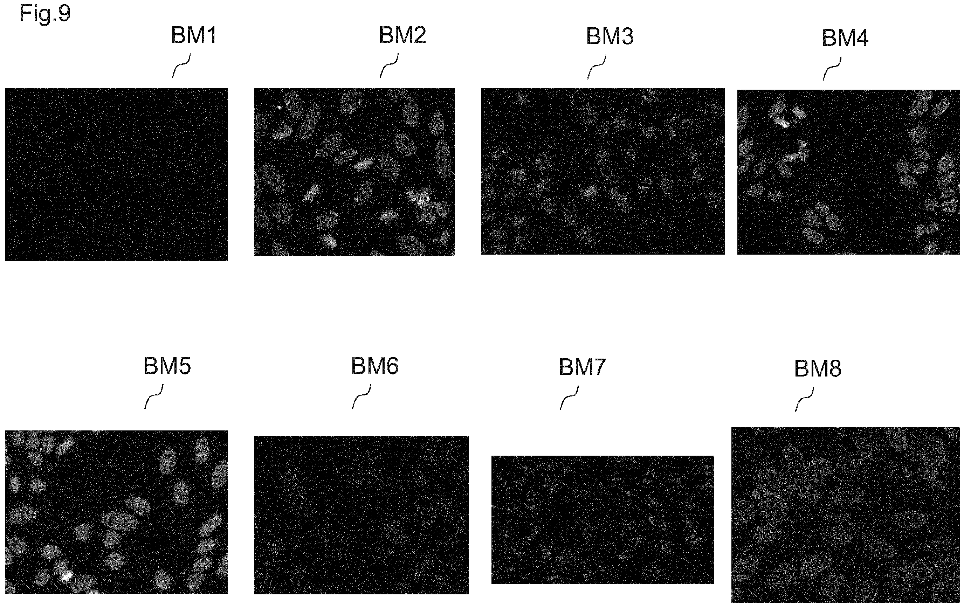

Die Figur 9 zeigt unterschiedliche antinukleäre Antikörper-Fluoreszenzmustertypen BM1,..., BM8. Der Mustertyp BM1 stellt eine sogenannte Negativfärbung dar, in dem Fall, dass keiner der weiteren zu detektierenden antinukleären Antikörper-Fluoreszenzmustertypen vorhanden ist. Dieses entspricht dem Muster AC-0 aus der Figur 18 mit dem hier beispielhaft verwendeten Musterindex n=1. Die beispielhafte Musterklassifikation aus der Figur 18 entstammt der Quelle www.anapatterns.org/trees-full.php.
Das Muster BM2 ist eine sogenannte homogene Färbung bzw. der Mustertyp homogen, welcher in der Figur 18 als AC-1 bezeichnet ist mit dem hier beispielhaft verwendeten Musterindex n=2.
Der Mustertyp des Musters BM3 ist eine sogenannte Zentromer-Färbung, welche in der Figur 18 als AC-3 bezeichnet ist mit dem hier beispielhaft verwendeten Musterindex n=3.
Der Mustertyp BM4 ist eine sogenannte dichte feine Sprenkelung, welcher als Mustertyp AC-2 in der Figur 18 bezeichnet ist mit dem hier beispielhaft verwendeten Musterindex n=4.

Der Mustertyp BM5 ist ein sogenanntes fein- oder grob gesprenkeltes Muster, welches in der Figur 18 als AC4 oder AC5 bezeichnet wird mit dem hier beispielhaft verwendeten Musterindex n=5.

Der Mustertyp BM6 stellt als Mustertyp sogenannte nukleäre Punkte dar, welches in der Figur 18 als Mustertyp AC-6,7 bezeichnet ist mit dem hier beispielhaft verwendeten Musterindex n=6.

Der Mustertyp BM7 ist ein sogenannter nukleolärer Mustertyp, welcher in der Figur 18 als AC-8, 9,10 bezeichnet ist mit dem hier beispielhaft verwendeten Musterindex n=7.

Der Mustertyp BM8 ist ein sogenannter nukleär randständiger bzw. Kernmembranmustertyp, welcher in der Figur 18 als Mustertyp AC-11,12 bezeichnet ist mit dem hier beispielhaft verwendeten Musterindex n=8.

Die unterschiedlichen antinukleären Antikörper-Fluoreszenzmustertypen umfassen somit homogene Muster (AC-1), gesprenkelte Muster (AC-2, 4, 5), ein Zentromermuster (AC-3), nukleäre Punktmuster (AC-6,7), nukleoläre Muster (AC-8, 9,10), als auch den Fluoreszenzmustertypen nukleär randständig (AC-11,12). Eine weitere Fluoreszenzmustertypklasse ist dann die sogenannte Negativklasse (AC-0) im Falle einer Patientenprobe ohne spezifische primäre antinukleären Antikörper.

Das Bild B aus der Figur 8 ist ein beispielhaft gewähltes Fluoreszenzbild, welches sowohl eine Präsenz des homogenen Musters (AC-1) als auch fein- oder grob-gesprenkelter Muster (AC-4, AC-5) Muster aufweist. Es wird nun im Folgenden später noch darauf eingegangen, in welcher Weise das hier vorgeschlagene Convolutional Neural Network diese beiden Mustertypen detektieren kann.

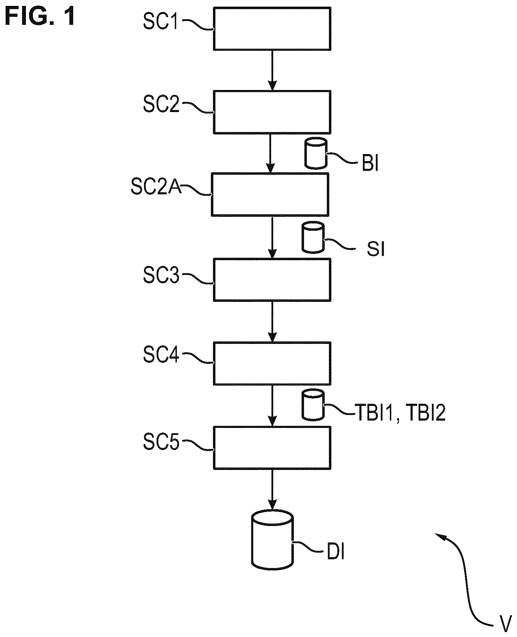

Figur 1 zeigt die wesentlichen Schritte des erfindungsgemäßen Verfahrens V. In einem ersten Schritt SC1 erfolgt das Inkubieren des Zellsubstrates.

In einem Schritt SC2 erfolgt das Erfassen des Gesamtbildes, sodass eine Bildinformation BI bereitgestellt wird.

In einem Schritt SC2A erfolgt das Bestimmen eines segmentierten Bildes mittels Segmentieren des Gesamtbildes. Hieraus ergibt sich eine sogenannte Segmentierungsinformation SI.

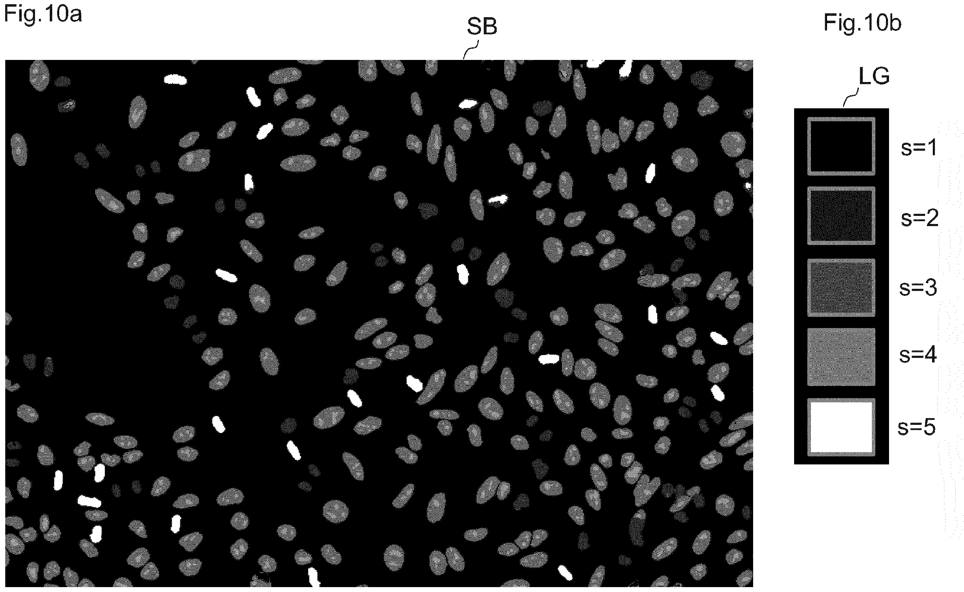

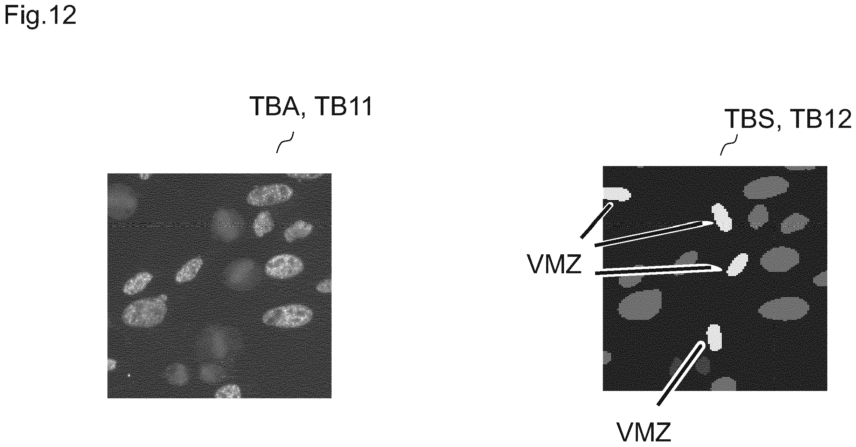

Eine solche Segmentierungsinformation SI ist als ein segmentiertes Bild SB in der Figur 10a dargestellt. Die Figur 10b zeigt hierzu zu den unterschiedlichen Segmentklassen s=1 ... S für S=5 unterschiedliche Grauwertstufen, welche hier die unterschiedlichen Segmentklassen in dem Bild SB aus der Figur 12a indizieren. Die erste Segmentklasse s=1 ist eine sogenannte Hintergrundklasse. Eine zweite Klasse s=2 indiziert eine schlechte Mitosezelle bzw. eine Mitosezelle von nicht hinreichender Qualität, alternativ auch eine invalide Mitosezelle genannt. Im Sinne dieser Anmeldung weist eine Mitosezelle dann eine nicht hinreichende Qualität auf bzw. ist dann invalide, wenn sie sich in einem falschen bzw. invaliden Mitosestadium befindet. Eine weitere Klasse s=3 indiziert eine Interphase-Zelle. Eine weitere Klasse s=4 indiziert einen Bereich mit Nucleoli. Eine weitere Klasse s=5 indiziert eine sogenannte gute Mitosezelle bzw. eine Mitosezelle von hinreichender Qualität, auch valide Mitosezellen genannt. Vorzugsweise indiziert ein solches Bildsegment der Klasse s=5 eine mitotische Zelle bzw. eine Mitosezelle in einem Stadium der sogenannten Metaphase. Ein solches Bildsegment indiziert eine Metaphasenplatte einer Mitosezelle in einem Stadium der sogenannten Metaphase. Im Sinne dieser Anmeldung weist eine Mitosezelle dann eine hinreichende Qualität auf bzw. ist dann valide, wenn sie sich in einem korrekten bzw. validen Mitosestadium befindet. Ein korrektes bzw. valides Mitosestadium ist die sogenannte Metaphase. Eine Mitosezelle, die sich nicht in einer Methapase befindet, ist also eine falsche bzw. invalide Mitosezelle. Insbesondere weist also das segmentierte Bild wenigstens eine Segmentklasse auf, welche eine Metaphasenplatte einer Mitosezelle in einem Stadium der Metaphase repräsentiert bzw. indiziert. Dieses sind in Figur 10a die rein weißen Bildsegmente.

In einem nächsten Schritt SC3 erfolgt das Detektieren jeweiliger Bildsegmente in dem segmentierten Bild, welche jeweils wenigstens eine mitotische Zelle repräsentieren, und zwar eine valide Mitosezelle. Im Sinne dieser Anmeldung weist eine Mitosezelle dann eine hinreichende Qualität auf bzw. ist dann valide, wenn sie sich in einem korrekten bzw. validen Mitosestadium befindet. Ein korrektes bzw. valides Mitosestadium ist die sogenannte Metaphase. Eine Mitosezelle, die sich nicht in einer Methapase befindet, ist also eine falsche bzw. invalide Mitosezelle. Es werden also solche Bildsegmente detektiert, welche in dem segmentierten Bild jeweils eine valide mitotische Zelle dadurch repräsentieren, dass diese jeweiligen Bildsegmente jeweilige Metaphasenplatten jeweiliger Mitosezellen in einem Stadium der Metaphase indizieren. Dieses sind in Figur 10a die rein weißen Bildsegmente.

Gemäß der Figur 1 erfolgt dann in einem Schritt SC4 das Selektieren von Teilbildern des Gesamtbildes, welche jeweils wenigstens eine mitotische Zelle vorzugsweise hinreichender Qualität aufweisen, und dazu korrespondierenden Teilbildern des segmentierten Bildes auf Basis der detektierten Bildsegmente. Es werden also solche Teilbilder selektiert, welche jeweils wenigstens ein Bildsegment aufweisen, welches wiederum eine Metaphasenplatte einer Mitosezelle in einem Stadium der Metaphase indiziert.

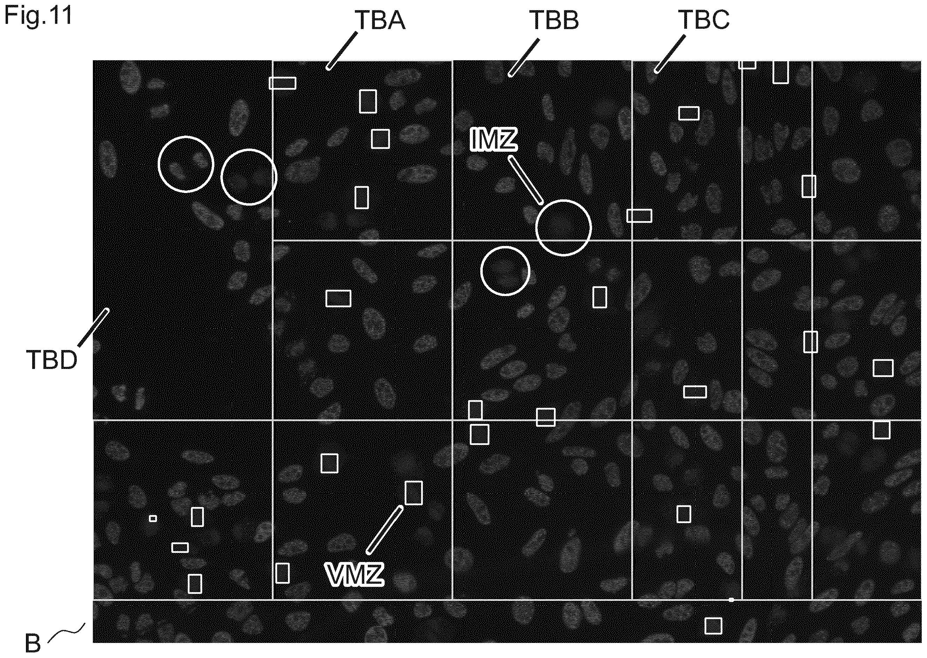

Hierzu zeigt die Figur 11 noch einmal das Bild B, welches in Teilbilder TBA, TBB, TBC, TBD und auch weitere Teilbilder unterteilt ist. Mittels weißer Quadrate werden Mitosezellen VMZ indiziert, welche valide sind und welche eine hinreichende Qualität aufweisen bzw. in einem Stadium der Metaphase sind. Weiße Kreise indizieren invalide Mitosezellen IMZ von nicht hinreichender Qualität. Das Teilbild TBB wird in diesem Beispiel nicht selektiert, da es keine valide Mitosezelle VMZ aufweist.

Das Aufteilen des Bildes B in entsprechende Teilbilder kann vorzugsweise derart erfolgen, dass aus einer Lageinformation von Mitosezellen aus dem Bild SB der Figur 10a darauf geschlossen wird, ob innerhalb eines Teilbildes des Bildes B eine solche valide Mitosezelle vorhanden ist. Die Figur 11 zeigt hierzu eine entsprechende für das Bild B übernommene Aufteilung in Teilbilder und detektierte Bildsegmenten, welche die valide Mitosezellen VM von hinreichender Qualität aufweisen.

Gemäß der Figur 1 erfolgt in dem Schritt SC4 das Selektieren von Teilbildern des Gesamtbildes, welche jeweils wenigstens eine mitotische Zelle aufweisen, und dazu korrespondierenden Teilbildern des segmentierten Bildes auf Basis der detektierten Bildsegmente (VMZ).

In einem Schritt SC5 erfolgt dann das Detektieren jeweiliger tatsächlicher Präsenzen jeweiliger der zellulären Fluoreszenzmustertypen mittels eines Convolutional Neural Network auf Basis der selektierten Teilbilder des Gesamtbildes und der selektierten Teilbilder des segmentierten Bildes.

Dadurch, dass vorzugsweise auf Bildsegmente mit einer mitotischen Zelle von hinreichender Qualität abgestellt wird und dass ferner eine Selektion der Teilbilder in Abhängigkeit jener detektierten Bildsegmente, welche jeweils wenigstens eine mitotische Zelle einer hinreichenden Qualität indizieren, erfolgt, wird sichergestellt, dass die zu betrachtende Mitosezelle bzw. die in dem Teilbild vorhandene Mitosezelle in einem korrekten Stadium ist um als eine valide Mitosezelle hinsichtlich ihrer Färbung ihrer Metaphasenplatte eine valide und sichere Information für die Detektion der unterschiedlichen antinukleären Antikörper-Fluoreszenzmustertypen zu repräsentieren.

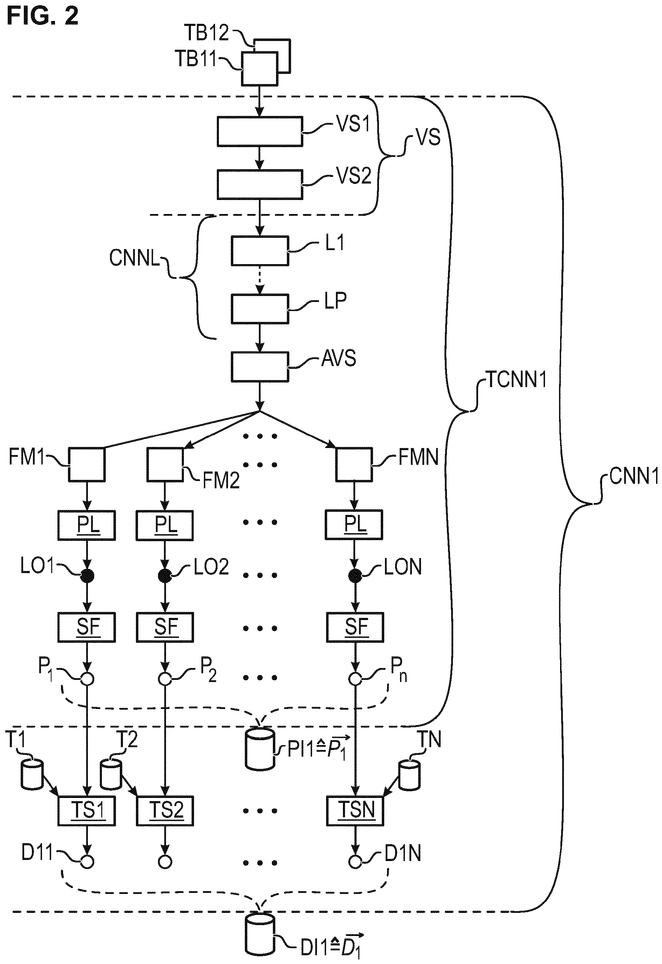

Figur 2 zeigt wesentliche Schritte des Convolutional Neural Network in einer Ausführungsform CNN1 zur Bestimmung einer Detektionsinformation DI1 hinsichtlich einer Präsenz von antinukleären Antikörper-Fluoreszenzmustertypen für ein Teilbild TB11 des Gesamtbildes mittels gleichzeitiger Prozessierung bzw. Analyse des Teilbildes TB11 des Gesamtbildes und des dazu korrespondierenden Teilbildes TB12 des segmentierten Bildes. Die Teilbilder TB11 und TB12 stellen somit ein Teilbild-Tupel dar. Die Teilbilder TB11 und TB12 sind vorzugsweise auf einen Wertebereich bzw. Grauwertebereich von 0 bis 1 normiert.

Die Figur 12 zeigt ein beispielhaftes Teilbild TBA als ein Teilbild TB11 des Gesamtbildes B sowie ein dazu korrespondierendes Teilbild TBS, TB12 aus dem segmentierten Bild SB.

Es ist klar erkennbar, dass das Teilbild TB11 valide Mitosezellen bzw. Mitosezellen von hinreichender Qualität aufweist, welche als VMZ in dem segmentierten Teilbild TBS, TB12 indiziert sind. Die segmentierten, weiß dargestellten, Bildsegmente VMZ repräsentieren bzw. indizieren insbesondere Metphasenplatten von Mitosezellen in einem Stadium der Metaphase.

Derartige Teilbildtupel TB11, TB12 werden dann gemäß der Figur 2 durch das Convolutional Neural Network CNN1 gleichzeitig bzw. gemeinsam prozessiert. Hierdurch kann das Convolutional Neural Network mittels des Teilbildes TB12 des segmentierten Bildes SB auf eine Lokalisationsinformation bezogen auf Zellbereiche bzw. Zellstrukturen abstellen, welche in dem segmentierten Teilbild TB12 indiziert sind, und gleichzeitig auch die tatsächlichen patientenspezifischen Fluoreszenzmuster in dem Teilbild TB11 des Gesamtbildes detektieren. Mit anderen Worten: Das Teilbild TB12 des segmentierten Bildes SB hilft dem Convolutional Neural Network, bei der Analyse des Teilbildes TB11 des Gesamtbildes B auf für jeweilige Mustertypen jeweilige charakteristische Bereiche von Zellen bzw. Zellstrukturen abzustellen.

Das Convolutional Neural Network CNN1 bestimmt dann eine Detektionsinformation DI1, um für N unterschiedliche Klassen, hier beispielhaft mit Index n=1... N und N=8, jeweils einen Wert auszugeben, welcher in dem Wertebereich $D_n \in \{0,1\}$ als boolescher Wert die Präsenz des Musters detektiert bzw. indiziert. Die Detektionsinformation DI1 für alle N Mustertypen bzw. Musterklassen mit den Werten D11, ..., D1N entspricht dann einem Vektor

$$\overrightarrow{D_1} = \begin{Bmatrix} D_{11} \\ \vdots \\ D_{1N} \end{Bmatrix} \quad .$$

Gemäß der Figur 2 erfolgt dann ein Prozessieren über mehrere Layer L1,..., LP eines Convolutional Neural Network CNN1, wobei jedes Layer L1,..., LP wenigstens ein Convolutional Layer aufweist.

Das Convolutional Neural Network CNN1 bestimmt dann für jede der N=8 Klassen bzw. N=8 Fluoreszenzmustertypen eine jeweilige Featuremap FM1,..., FMN. Es wird dann auf Basis einer jeweiligen Featuremap FM1,..., FMN ein jeweiliges Konfidenzmaß P1,..., PN bzw. ein jeweiliger Prädiktionswert P1,..., PN bezogen auf eine jeweilige tatsächliche Präsenz des jeweiligen Fluoreszenzmustertyps mit Index n=1... N bestimmt.

Dies erfolgt vorzugsweise dadurch, dass mittels eines Pooling Layers PL bzw. einer Pooling Layer Funktion PL, welches bzw. welche vorzugsweise ein sogenanntes Global Average Pooling durchführt, eine Featuremap FM1 auf einen einzelnen Skalarwert bzw. einen gemittelten Wert, welcher vorzugsweise auch ein Logit genannt wird, als ein Wert LO1 reduziert wird.

Die Logit-Werte LO1,.., LON der N Klassen bzw. Fluoreszenzmustertypen werden dann jeweils einzeln einer sogenannten Sigmoidfunktion SF unterworfen, um für eine jeweilige Klasse n auf Basis der jeweiligen Featuremap FMn mit Index n einen jeweiligen Prädiktionswert bzw. ein jeweiliges Konfidenzmaß Pn mit Index n zu bestimmen. Durch diese Struktur des Convolutional Neural Network ergibt sich also der Vorteil, dass für jeden einzelnen Fluoreszenzmustertypen ein eigener Detektionskanal vorhanden ist und dass nicht nur ein einzelnes Muster bzw. ein einzelner Mustertyp als präsent detektiert werden kann sondern eben auch mehrere Mustertypen gleichzeitig.

Das Bestimmen jeweiliger Konfidenzmaße Pn als eine Prädiktionsinformation bzw. Präsenzinformation PI1 ermöglicht dann eine Ausgabe von Prädiktionswerten bzw. Konfidenzmaßen in Form eines Vektors

$$\overrightarrow{P_1} = \begin{Bmatrix} P_1 \\ \vdots \\ P_N \end{Bmatrix}$$

mit einem Wertebereich $0 \leq P_n \leq 1$.

Werden solche Konfidenzmaße Pn bestimmt und vorzugsweise auch ausgegeben, so ist dies vorteilhaft, da ein Nutzer bei einer späteren finalen Befundung ein jeweiliges Konfidenzmaß als Indikator für die Präsenz eines jeweiligen Musters verwenden kann.

Das Teilnetz TCNN1 des Convolutional Neural Network CNN1, welches zur Bestimmung der Konfidenzmaße Pn auf Basis der Teilbilder TB11, TB12 verwendet wird, kann auf jeweilige Teilbild-Tupel TB11, TB12, bestehend aus einem Teilbild TB11 des Gesamtbildes und einem dazu korrespondierenden Teilbild TB12 des segmentierten Bildes, jeweils separat angewendet werden, wie später im Detail noch erläutert wird.

Die Figur 2 zeigt ferner weitere Schritte, mittels welcher auf Basis der Konfidenzmaße bzw. Prädiktionswerte, welche als Prädiktionsinformation PI1 zusammengefasst werden können, und mittels welcher Detektionsergebnisse bzw. Detektionswerte D11,..., D1N bestimmt werden können, welche wiederum als Detektionsinformation DI1 zusammengefasst werden können.

Ein Konfidenzmaß Pn kann dann über eine Schwellenwertfunktion TS1 unter Anwendung eines vorzugsweise durch einen Nutzer vorgebbaren Schwellenwertes oder einen auf andere Art vorgegebenen Schwellenwert T1 ausgewertet werden, um die entsprechende Detektionsinformation DI1 zu bestimmen. Vorzugsweise kann der Detektionswert D11 den Wert 1 annehmen, also ein Vorhandensein des Musters mit dem Index n=1 indizieren, wenn das Konfidenzmaß Pn einen Schwellenwert T1 von 0,5 überschreitet.

Eine Anwendung weiterer Schwellenwertoperationen TS1,..., TSN unter Verwendung jeweiliger vorzugsweise für die jeweiligen Muster jeweiliger individueller Schwellenwerte T1,..., TN ermöglicht dann die Ermittlung der Detektionswerte D11,..., D1N.

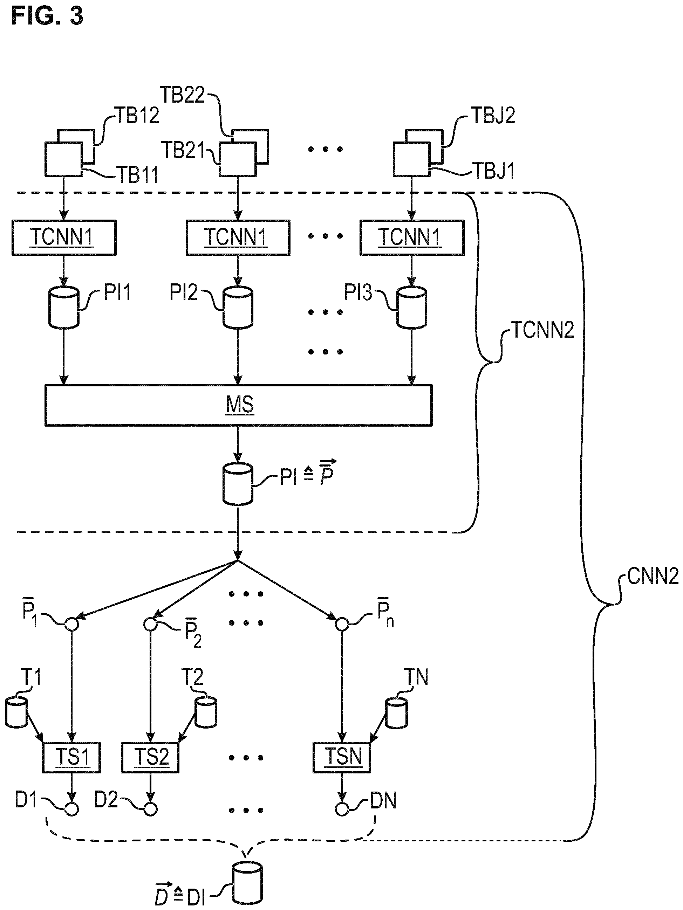

Das Convolutional Neural Network CNN1 aus Figur 2 weist ein partielles Convolutional Neural Network TCNN1 auf, welches später noch in der Figur 3 Anwendung findet.

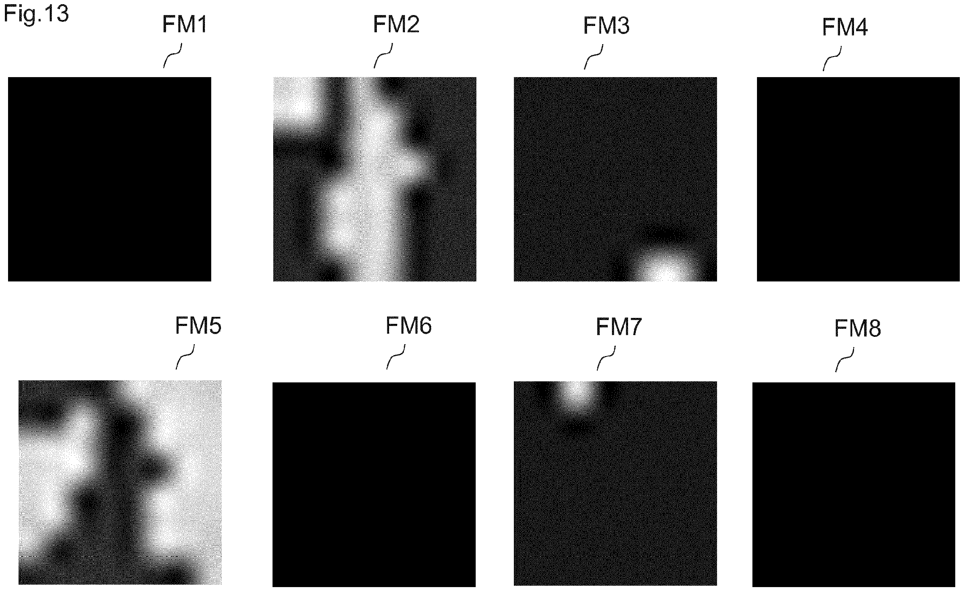

Die Figur 13 zeigt beispielhafte Featuremaps FM1,..., FM8 zur Detektion unterschiedlicher Fluoreszenzmustertypen bzw. Beispielmuster für das Teilbild TB11 aus Figur 12. Solche Muster sind beispielhaft in Figur 9 dargestellt und stellen Beispiele für entsprechende Fluoreszenzmustertypen aus der Figur 18 mit den entsprechenden Bezeichnungen dar. Die Featuremap FM2 aus der Figur 13 stellt eine Aktivierung bezüglich eines homogenen Musters für das Teilbild TB11 aus der Figur 12 dar. Das Maß an Helligkeit in der Featuremap FM2 indiziert also ein wahrscheinliches Vorliegen eines homogenen Fluoreszenzmustertypen in dem Teilbild TB11. Ferner stellt die Featuremap FM5 eine wahrscheinliche Präsenz fein gesprenkelter oder grob gesprenkelter Muster in dem entsprechenden Teilbild TB11 dar. Für die weiteren Featuremaps FM1, FM3, FM4, FM6, FM7, FM8 ergibt sich keine oder eine relativ geringe Aktivierung. Die Featuremaps FM1,..., FM8 aus der Figur 13 wurden ursprünglich mit einer Auflösung von 8x8 Pixeln bestimmt und dann mittels Interpolation auf die Auflösung von 512x512 Pixeln des Teilbildes TB11 interpoliert.

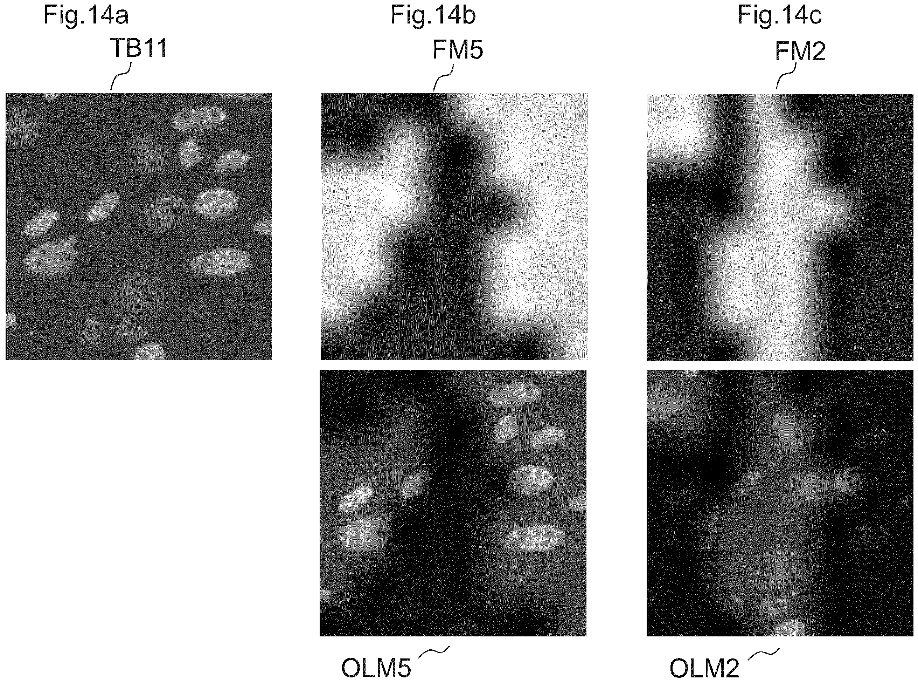

Die Figur 14a zeigt noch einmal das Teilbild TB11 aus der Figur 12 zusammen mit der Featuremap FM5 in der Figur 14b sowie eine Überlagerung dieser Featuremap FM5 über das Teilbild TB11 als eine überlagerte Featuremap OLM5. Es wird hier klar ersichtlich, dass es mittels des vorgeschlagenen Convolutional Neural Network gelungen ist, eine Featuremap FM5 zu erzeugen, welche Zellkerne mit einer feinen bzw. groben Sprenkelung hervorhebt bzw. erkennt.

Die Figur 14c zeigt die Featuremap FM2 aus der Figur 13 für homogene Muster sowie eine über das Teilbild TB11 der Figur 14a überlagerte Featuremap OLM2. Auch hier ist es ersichtlich, dass es gelungen ist mittels des vorgeschlagenen Convolutional Neural Network aus dem Teilbild TB12 jene Region hervorzuheben bzw. zu detektieren, welche Zellkerne mit einer homogenen Färbung bzw. einem homogenen Mustertypen darstellen.

Betrachtet man die Figur 12 und das segmentierte Teilbild TBS, TB12, so wird ersichtlich, dass gerade die validen Mitosezellen VMZ mit ihren Metaphasenplatten jene Zellen sind, welche für die Detektion des homogenen Musters gemäß der Figur 14c in der überlagerten Featuremap OLM2 detektiert werden. Auch wenn prinzipiell auf den Interphase-Zellen, welche in der überlagerten Featuremap OLM5 aus der Figur 14b selektiert wurden, eine homogene Färbung vorhanden sein kann, so wird jedoch diese durch die gesprenkelte Färbung dieser Interphase-Zellen überdeckt, sodass eine Detektion eines homogenen Musters alleine auf diesen Interphase-Zellen aus der Figur 14b in der überlagerten Featuremap OLM5 nicht sicher erfolgen kann. Dadurch jedoch, dass sichergestellt wurde, dass das selektierte Teilbild TB11 aus der Figur 12 auf jeden Fall valide Mitosezellen VMZ aufweist, kann also vorteilhafterweise die homogene Musterfärbung bzw. der homogene Fluoreszenzmustertyp gerade auf diesen validen Mitosezellen erkannt werden, wie durch eine gemeinsame Betrachtung der überlagerten Featuremap OLM2 aus der Figur 14c und des Teilbildes TB11 aus der Figur 14a sowie des dazu korrespondierenden segmentierten Teilbildes TB12 aus der Figur 12 ersichtlich wird.

Die Figur 3 illustriert weitere vorteilhafte Ausgestaltungen des erfindungsgemäßen Verfahrens. Das hier dargestellte Convolutional Neural Network CNN2 verwendet das Teil-Convolution Neural Network TCNN1 aus der Figur 2, um für jeweilige Teilbild-Tupel TB11, TB12,..., TBJ1, TBJ2 mit Tupel-Index j=1...J jeweilige Teilbild-Konfidenzmaße PI1, ..., PIJ zu bestimmen, wie zuvor in der Figur 2 dargestellt und detailliert erläutert, um dann die jeweiligen tatsächlichen Präsenzen der jeweiligen Fluoreszenzmustertypen und die dazugehörigen jeweiligen Konfidenzmaße auf Basis der Teilbild-Konfidenzmaße als eine Präsenzinformation bzw. Prädiktionsinformation PI zu bestimmen. Hierbei entspricht ein Teilbild-Konfidenzmaß PI einem Vektor $\vec{P_J}$ mit Index j. Die Information PI entspricht hierbei einem Vektor

$$\vec{\vec{P}} = \begin{Bmatrix} \bar{P}_1 \\ \vdots \\ \bar{P}_N \end{Bmatrix}$$

mit einem jeweiligen Konfidenzmaß $\bar{P}_n$ für einen jeweiligen Fluoreszenzmustertypen mit Index n.

Die sich ergebenden Teilbild-Konfidenzmaße $\vec{P_J}$ mit Index j=1...J werden dann in einem Mittelungsschritt MS über alle selektierten j=1...J Teilbilder bzw. Teilbild-Tupel gemittelt gemäß

$$\vec{\vec{P}} = \frac{1}{J} \sum_{i=1}^{J} \vec{P_i} \ .$$

Diese Konfidenzmaße

$$\vec{\vec{P}} = \begin{Bmatrix} \bar{P}_1 \\ \vdots \\ \bar{P}_N \end{Bmatrix}$$

können dann als die Prädiktionsinformation bzw. eine Konfidenzinformation PI ausgegeben werden.

Diese Ausgestaltung des erfindungsgemäßen Verfahrens ist vorteilhaft, da somit ein Convolutional Neural Network CNN2 nicht gleichzeitig alle Informationen eines gesamten Fluoreszenzbildes B und eines gesamten segmentierten Bildes SB auf einmal prozessieren muss, sondern in separaten, voneinander getrennten Prozessierungspfaden die Teilbild-Tupel jeweils für sich ausgewertet werden können.

Es können dann die ermittelten Konfidenzmaße PI bzw.

$$\vec{P} = \begin{Bmatrix} \bar{P}_1 \\ \vdots \\ \bar{P}_N \end{Bmatrix}$$

in jeweiligen Schwellenwert-Beurteilungsschritten TS1,..., TSN unter Verwendung vorzugsweise vorgebbarer oder aber auf andere Art vorgegebener Schwellwerte T1,..., TN bewertet werden, um eine entsprechende Detektionsinformation DI mit entsprechenden Detektionswerten D1,..., DN mit Index n=1...N als

$$\vec{D_1} = \begin{Bmatrix} D_1 \\ \vdots \\ D_N \end{Bmatrix}$$

auszugeben.

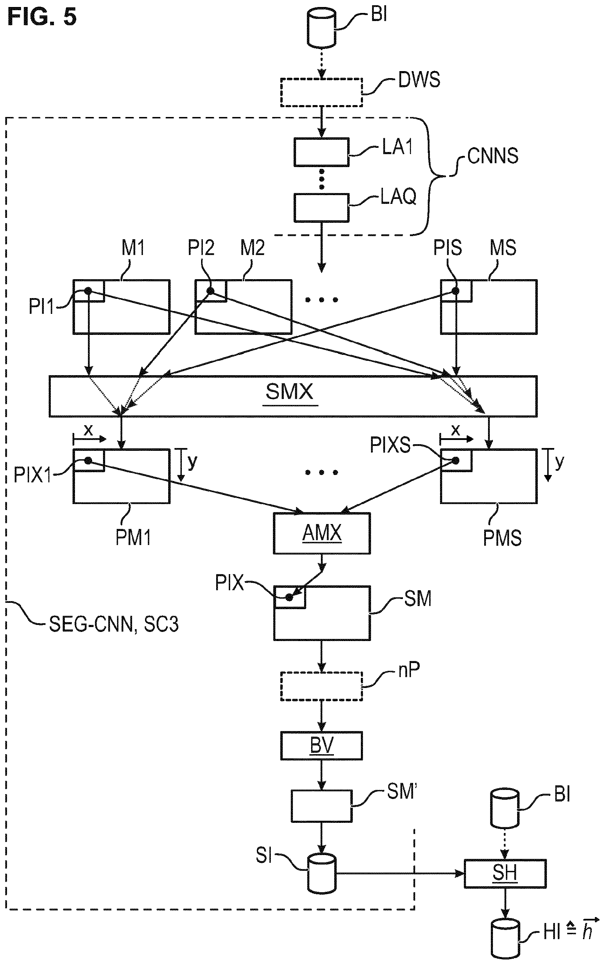

Die Figur 5 zeigt Details des Schrittes SC3 aus der Figur 1 zum Detektieren von Bildsegmenten, welche jeweils wenigstens eine mitotische Zelle vorzugsweise hinreichender Qualität repräsentieren, mittels Analyse des Gesamtbildes bzw. dessen Bildinformation BI. Dieses erfolgt mittels eines Segmentierungs-Convolutional Neural Network SEG-CNN. Das Segmentierungs-Convolutional Neural Network SEG-CNN weist Schritte bzw. Layer LA1, ..., LAQ auf, welche wiederum als ein Convolutional Neural Network aufgefasst werden können. Die Segmentierung erfolgt also mittels eines weiteren Convolutional Neural Network SEG-CNN, welches sich von dem Convolutional Neural Network CNN2 zum Detektieren jeweiliger tatsächlicher Präsenzen jeweiliger der zellulären Fluoreszenzmustertypen mittels eines Convolutional Neural Network auf Basis der selektierten Teilbilder des GesamtbBildes und der selektierten Teilbilder des segmentierten Bildes unterscheidet. Die Aufteilung der Segmentierungsaufgabe und der Detektionsaufgabe auf zwei unterschiedliche Convolutional Neural Networks ist vorteilhaft, da das Convolutional Neural Network zur Detektion nicht auch zum Zwecke der Segmentierung trainiert werden muss und somit das Convolutional Neural Network zum Zwecke der Segmentierung besonders gezielt trainiert werden kann.

Gemäß der Figur 5 wird das Gesamtbild bzw. die entsprechende Bildinformation BI einem Convolutional Neural Network CNNS zum Zwecke einer Segmentierung zugeführt.

In der Figur 5 ist das Segmentierungs-Convolutional Neural Network SEG-CNN dargestellt, welches mittels mehrerer Layer LA1, LAQ eine Segmentierung eines Eingangsbildes herbeiführt. Vorzugsweise erfolgt hierbei eine Normierung der Bilddaten BI auf einen Wertebereich von 0 bis 1. Vorzugsweise erfolgt ferner in einem optionalen Schritt DWS ein sogenanntes Downscaling. Vorzugsweise weist ein Bild der Bilddaten BI eine Dimensionalität von 2400×1700 Pixeln auf. Dieses Bild kann dann durch ein sogenanntes Downsampling auf eine Größe von 800×800 Pixeln reduziert werden. Die weiteren Prozessierungsschritte sind hier im Detail für den beispielhaften Fall dargelegt, dass ein Downscaling DWS des Gesamtbildes auf eine Größe von 800×800 Pixeln erfolgte. Dieses ist aber nicht zwingend notwendig, das Segmentierungs-Convolutional Neural Network SEG-CNNkann auch in seiner Dimensionierung so ausgestaltet werden, dass es das Gesamtbild mit einer Größe von 2400x1700 Pixeln ohne ein Downscaling verarbeiten kann.

Das Convolutional Neural Network CNNS weist mehrere Layer LA1,..., LAQ auf, wobei jedes dieser Layer wenigstens ein Convolutional Layer aufweist. Das Convolutional Neural Network CNNS erzeugt dann für jede der Segmentklassen s=1...S mit hier beispielsweise S=5 Klassen, wie in Figur 10b durch die Legende indiziert, eine jeweilige Aktivierungsmap M1,..., MS. Die Aktivierungsmaps M1, ..., MS weisen jeweils vorzugsweise eine gleiche Größe bzw. Auflösung von vorzugsweise 800x800 Pixeln auf, wie das Gesamtbild bzw. die Bilddaten BI nach dem Downscaling DWS.

Die Aktivierungsmap M1 für die erste Segmentklasse s=1 indiziert in ihrem ersten Pixel PI1 mit dem dort vorhandenen Wert, zu welchem Grade das dazu korrespondierende Pixel des Bildes B bzw. der Bildinformation BI zu dieser ersten Segmentklasse gehört. Entsprechende einzelne Pixel PI1,...PIS der Aktivierungsmaps M1,...MS indizieren jeweils, zu welchem Grade das an gleicher Stelle lokalisierte Pixel des Bildes B bzw. der Bildinformation BI zu der entsprechenden Klasse gehört. Durch Verknüpfung der Werte der Aktivierungsmaps M1, M2,..., MS an der gleichen Pixelstelle bzw. der entsprechenden Werte dieser korrespondierenden Pixelstelle PI1, PI2,..., PIS mittels einer sogenannten Softmaxfunktion SMX kann dann für eine Wahrscheinlichkeitsmap PM1 an der entsprechenden Pixelposition PIX1 ein Wert generiert werden, welcher indiziert, mit welcher Wahrscheinlichkeit in einem Wertebereich von 0 bis 1 das korrespondierende Pixel des Bildes B zu der ersten Klasse mit s=1 gehört. Gleichzeitig werden durch die Softmaxfunktion für die Wahrscheinlichkeitsmaps PM1, ..., PMS an entsprechenden korrespondierenden bzw. gleichen Pixelpositionen PIX1, ..., PIX2 die entsprechenden Wahrscheinlichkeiten bestimmt, welche jeweils indizieren, mit welcher Wahrscheinlichkeit in einem Wertebereich von 0 bis 1 das korrespondierende Pixel des Bildes B zu der jeweiligen Klasse mit Index s=1...S gehört. Die hier dargestellten Achsenverläufe x sowie y indizieren jeweilige Indizes für die entsprechenden Pixelpositionen innerhalb der Wahrscheinlichkeitsmaps PM1, ..., PMS. Die Wahrscheinlichkeitsmaps PM1, ..., PMS weisen vorzugsweise eine gleiche Größe bzw. Auflösung von vorzugsweise 800x800 Pixeln auf wie das Bild B bzw. die Bilddaten BI nach dem Downscaling DWS und wie die Aktivierungsmaps M1, ..., MS.

Es wird dann eine Segmentierungsmap SM bestimmt, welche an einer entsprechenden Pixelposition PIX1 einen Wert aus dem Wertbereich s e {1, ...,S} aufweist und indiziert, zu welcher Segmentklasse s=1... S das entsprechende Pixel dieser Position PIX1 gehört. Hierfür erfolgt eine Verknüpfung der entsprechenden Pixelwerte der korrespondierenden Pixelposition PIX1 über alle Wahrscheinlichkeitsmaps PM1,..., PMS mittels einer Argmax-Funktion. Ein Pixel der Segmentierungsmap SM mit dem Index x, y enthält dann also jenen Indexwert jener Wahrscheinlichkeitsmap PM1,..., PMS, für welche der entsprechende Wahrscheinlichkeitswert an der Pixelposition am höchsten war. Dieses kann bestimmt werden gemäß

$$SM(x,y) = \underset{s \in \{1...S\}}{argmax} \; PM_s(x,y) \, .$$

Die Segmentierungs-Map SM enthält dann also für jedes einzelne Pixel einen Wert aus dem Wertebereich s=1... S, welcher das entsprechende Pixel einer jeweiligen Segmentklasse zuordnet.

Die Segmentierungs-Map SM weist vorzugsweise eine gleiche Größe bzw. Auflösung von vorzugsweise 800x800 Pixeln auf wie das Bild B bzw. die Bilddaten BI nach dem Downscaling DWS, ebenso wie die Aktivierungsmaps M1, ..., MS und ebenso wie die Wahrscheinlichkeitsmaps PM1, ..., PMS.

In dem Fall, dass vor der Segmentierung ein sogenanntes Downscaling des Bildes B bzw. der Bildinformation B in einem optionalen Schritt DWS erfolgte, kann dann vorzugsweise in einem vorzugsweise durchzuführenden Schritt UP ein sogenanntes Upscaling der Segmentierungs-Map SM von vorzugsweise 800x800 Pixeln zurück zur ursprünglichen Bildauflösung des Bildes B erfolgen, beispielsweise 2400 × 1700 Pixel.

Die Segmentierungs-Map SM kann dann zum Zusammenführen von Teilflächen bzw. Segmentflächen mittels digitaler Bildverarbeitung in einem Bildverarbeitungsschritt BV durch übliche Bildverarbeitungsmaßnahmen wie Eroding, Delation und/oder Contour Matching weiterverarbeitet werden, um dann zu einer modifizierten Segmentierungs-Map SM' zu gelangen, welche als eine Segmentierungsinformation SI ausgegeben werden kann. Eine solche Information mit einer Segmentierung SI bzw. segmentiertes Bild SB ist in der Figur 10a dargestellt.

Die Figur 5 illustriert, in welcher Weise das Segmentieren des Gesamtbildes in Bildsegmente unterschiedlicher Segmentklassen erfolgen kann, wobei die Segmentklassen wie in der Figur 10b illustriert gewählt werden können. Es indiziert vorzugsweise zumindest eine Segmentklasse der mehreren Segmentklassen ein Metaphasenstadium einer Mitosezelle. Mit anderen Worten: Es indiziert vorzugsweise zumindest eine Segmentklasse der mehreren Segmentklassen eine Metaphasenplatte einer Mitosezelle in einem Metaphasenstadium.

Die Segmentierungsinformation SI, wie beispielhaft als das Segmentierungsbild SB in der Figur 10a dargestellt, kann dann genutzt werden, um basierend auf einem oder mehreren Bildsegmenten wenigstens einer bestimmten Segmentklasse wenigstens einen Helligkeitswert für wenigstens einen Fluoreszenzmustertyp zu bestimmen und um dann wenigstens ein Konfidenzmaß eines Fluoreszenzmustertypes auf Basis wenigstens eines solchen Helligkeitswertes zu verifizieren.

Hierzu zeigt die Figur 5 die Möglichkeit, basierend auf dem Bild B bzw. der Bildinformation BI und basierend auf der Segmentinformation SI, wenigstens einen Helligkeitswert für wenigstens einen Fluoreszenzmustertyp aus dem Bild B bzw. der Bildinformation BI zu extrahieren. Dies erfolgt in einem Schritt SH zur Helligkeitsbestimmung.

Es erfolgt also gemäß der Figur 5 eine Bestimmung eines Helligkeitswertes für wenigstens einen Fluoreszenzmustertypen basierend auf einem oder mehreren Bildsegmenten wenigstens einer bestimmten Segmentklasse sowie ein Verifizieren des Konfidenzmaßes des Fluoreszenzmustertypen auf Basis des Helligkeitswertes des Fluoreszenzmustertypen.

Für die unterschiedlichen n=1... N Klassen können dann entsprechende Helligkeitswerte $h_n$ mit Index n=1..N als Vektor

$$\vec{h} = \begin{Bmatrix} h_1 \\ \vdots \\ h_N \end{Bmatrix}$$

bestimmt und als eine Helligkeitsinformation HI ausgegeben werden.

Wird beispielsweise auf einen Helligkeitswert für ein Muster "dicht feingesprenkelt" (AC-2) des Mustertyps n=4 abgestellt, so kann eine Helligkeitswertermittlung in der Weise erfolgen, dass die Interphase-Zellen der Segmentklasse s=3, welche auch in der Figur 10a eingezeichnet sind, mit ihren Helligkeitswerten an den entsprechenden korrespondierenden Stellen des Bildes B aus der Figur 8 herangezogen werden. Es kann dann beispielsweise für eine jede Interphase-Zelle bzw. jede Segmentfläche mit Index s=3 das 0,65 Quantil der Helligkeitswerte für sich bestimmt werden und dann die sich ergebenden mehreren Quantil-Helligkeitswerte der mehreren Interphase-Zellen noch mal mittels Mittelwertbildung gemittelt werden, um einen Helligkeitswert $h_4$ für das Fluoreszenzmuster mit Index n=4 zu bestimmen.

Für sogenannte fein oder grob gesprenkelte Muster des Typs AC-4, AC-5 mit Index n=5 kann dann beispielsweise auf ein 0,65-Quantil der Helligkeitswerte einer Interphase-Zelle bzw. einer entsprechenden Segmentfläche der Klasse s=3 abgestellt werden und dann über diese Helligkeitswerte zur Bestimmung eines Helligkeitswertes $h_5$ für das Fluoreszenzmuster mit Index n=5 gemittelt werden.

Für sogenannte homogene Muster (AC-1) des Typs mit Index n=2, wie auch in Figur 9 anhand des Beispielmusters BM2 illustriert, kann dann beispielsweise zunächst für jede valide Mitose-Zelle bzw. jede entsprechende Segmentfläche der Klasse s=5 ein 0,5-Quantil ermittelt werden und dann über die Quantilwerte aller validen Mitosezellen gemittelt werden, um einen Helligkeitswert $h_2$ für das Fluoreszenzmuster mit Index n=2 zu bestimmen.

Derart ermittelte Helligkeitswerte

$$\vec{h} = \begin{Bmatrix} h_1 \\ \vdots \\ h_N \end{Bmatrix}$$

14

können dann als Helligkeitsinformation HI bereitgestellt werden.

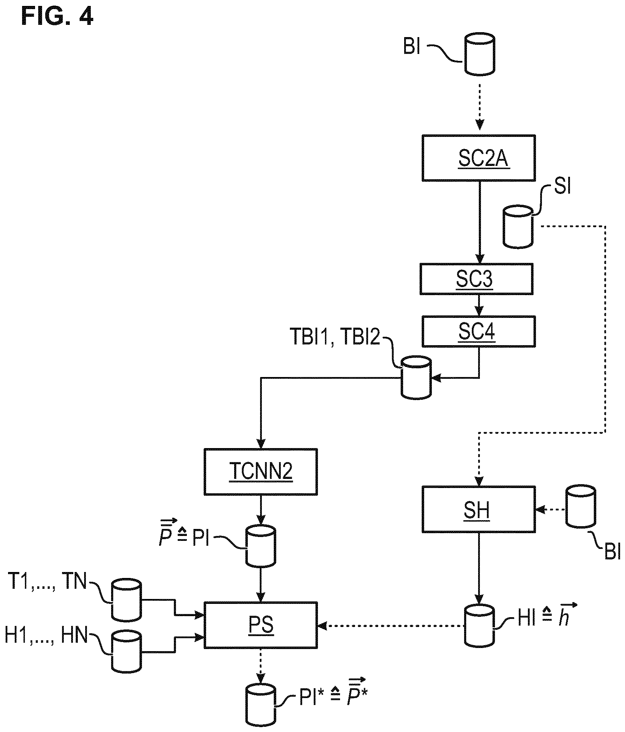

Die Figur 4 illustriert hierzu ein beispielhaftes Vorgehen, bei welchem auf Basis des Bildes B bzw. dessen Bildinformation BI mittels eines Teil-Convolutional Neural Network TCNN2, welches in der Figur 3 indiziert ist, ein Vektor

$$\vec{P} = \begin{Bmatrix} \bar{P}_1 \\ \vdots \\ \bar{P}_N \end{Bmatrix}$$

mit entsprechenden Konfidenzmaßen für die entsprechenden n=1... N Klassen ermittelt wird. Dieses wird dann als Konfidenzmaßinformation bzw. Prädiktionsinformation PI bereitgestellt.

Hierfür verwendet das Teil-Convolutional Neural Network TCNN2 jene Teilbilder bzw. jene Teilbildinformationen TBI1, TBI2, welche auf Basis des Bildes B mittels des Segmentierungsschrittes SC2A, des Detektionsschrittes SC3 und des Selektionsschrittes SC4 ermittelt wurden.

Die zuvor gewonnene Segmentierungsinformation SI wird dann in einem Schritt SH zur Bestimmung der Helligkeitswerte, welcher bereits in der Figur 5 dargelegt wurde, verwendet, um auf Basis der Helligkeitswerte des Bildes B bzw. der Bildinformation BI die Helligkeitsinformation HI zu ermitteln und bereitzustellen, welche eben auch als Vektor

$$\vec{h} = \begin{Bmatrix} h_1 \\ \vdots \\ h_N \end{Bmatrix}$$

beschrieben werden kann.

In einem Prüfungsschritt PS erfolgt dann das Verifizieren der Konfidenzmaßinformation PI auf Basis der Helligkeitsinformation HI.

Hierbei werden dann die Werte des Konfidenzmaßes

$$\vec{P} = \begin{Bmatrix} \bar{P}_1 \\ \vdots \\ \bar{P}_N \end{Bmatrix}$$

anhand eines bzw. mehrerer Schwellwerte bezogen auf die Konfidenzmaßwerte in Form von Schwellenwerten T1,..., TN verifiziert als auch vorzugsweise anhand von Helligkeitsschwellenwerten in H1,..., HN, welche auf die Helligkeitswerte

$$\vec{h} = \begin{Bmatrix} h_1 \\ \vdots \\ h_N \end{Bmatrix}$$

angewendet werden.

Hierdurch wird dann also eine Ausgabe verifizierter Konfidenzmaße PI* ermöglicht. Die Schwellenwerte T1,..., TN sind vorgegeben. Die Schwellenwerte H1,..., HN sind vorgegeben.

Vorzugsweise können die Schwellenwerte T1,..., TN durch einen Nutzer vorgegeben werden, um Einfluss auf die Auswertung zu nehmen. Vorzugsweise können die Schwellenwerte H1,..., HN durch einen Nutzer vorgegeben werden, um Einfluss auf die Auswertung zu nehmen. Die Schwellenwerte H1, ..., HN sind individuelle Schwellenwerte je Fluoreszenzmustertyp. Die Ermittlung der verifizierten Konfidenzmaße PI* als Vektor

$$\overrightarrow{P^*} = \begin{Bmatrix} \overline{P^*}_1 \\ \vdots \\ \overline{P^*}_N \end{Bmatrix}$$

erfolgt dann vorzugsweise gemäß

$$\overline{P^*}_n = \begin{cases} 1 \;\; fuer \;\; \overline{P}_n > T_n \;\; \cap \; h_n > HS_n \\ 0 \;\; sonst \end{cases}.$$

Das hier vorgeschlagene Vorgehen ist vorteilhaft, da die Konfidenzmaße zwar zunächst auf Basis des Gesamtbildes B bzw. der selektierten Teilbilder bestimmt werden, in denen ein Convolutional Neural Network die Konfidenzmaße PI ermittelt, aber ferner auch explizit noch Helligkeitswerte HI aus dem Gesamtbild B ermittelt werden, um das Konfidenzmaß bzw. die Konfidenzmaße PI zu verifizieren; dies erfolgt vorzugsweise ohne eine Reduktion auf die selektierten Teilbilder. Hierdurch wird eine noch genauere Detektion von Fluoreszenzmustertypen ermöglicht. Ein Vorteil ist hierbei insbesondere, dass das Gesamtbild B hinsichtlich von Helligkeitswerten in entsprechenden Segmentklassen betrachtet wird, so dass hierdurch nicht nur eine Helligkeit von Zellen bzw. Segmentflächen eines selektierten Teilbildes betrachtet werden, sondern dass eben auch Segmentflächen außerhalb selektierter Teilbilder in Betracht gezogen werden. Dieses bewirkt, dass ein möglicher Helligkeitsartefakt auf einer einzelnen Zelle bzw. einer einzelnen Segmentfläche eines Teilbildes sich weniger stark auf die Bestimmung der Helligkeitswerte und somit der Bestimmung der verifizierten Konfidenzmaße auswirkt, da auf Konfidenzmaße eines Teilbildes Helligkeitswerte aus Segmentflächen auch außerhalb des Teilbildes angewendet werden und ein Helligkeitsartefakt einer einzelnen Segmentfläche weniger stark gewichtet wird, um die verifizierten Konfidenzmaße zu bestimmen.

Die Figur 2 zeigt Vorverarbeitungsschritte VS, VS1, VS2, welche zur Vorverarbeitung des Teilbildes TB11 des Gesamtbildes und des Teilbildes TB12 des segmentierten Bildes verwendet werden können. In dem ersten Vorverarbeitungsschritt VS1 erfolgt eine Faltung des Teilbildes TB11 und des Teilbildes TB12 als Eingangs-Featuremaps mit vorzugsweise acht verschiedenen Faltungskernel, wobei kein Striding durchgeführt wird und wobei die Dimensionalität der Teilbilder TB11, TB12 mit einer beispielhaften Dimensionalität von 512x512 Bildpixeln beigehalten wird. Die Wahl der Anzahl von acht Faltungskernel muss nicht notwendigerweise mit der Anzahl der N=8 Fluoreszenzmustertyp bzw. Fluoreszenzmusterklassen übereinstimmen.

In dem weiteren Vorverarbeitungsschritt VS2 erfolgt dann eine sogenannte Batch Normalization, wobei die Anzahl der Featuremaps, hier beispielsweise acht Featuremaps, beibehalten wird.

Die sich aus dem Schritt VS2 ergebenden acht Featuremaps werden dann in einer Abfolge von P unterschiedlichen Layern L1,..., LP mit Index p=1...P und hier beispielhaft P=6 prozessiert. Am Ende des Layers L1 ergibt sich eine Menge von beispielsweise R Featuremaps FMA1,.., FMAR mit Index r=1...R. In diesem Beispiel ist vorzugsweise der Parameter R=11. Die Anzahl R der Featuremaps am Ende des ersten Layers L1 kann von der Anzahl der Fluoreszenzmustertypen N unabhängig sein.

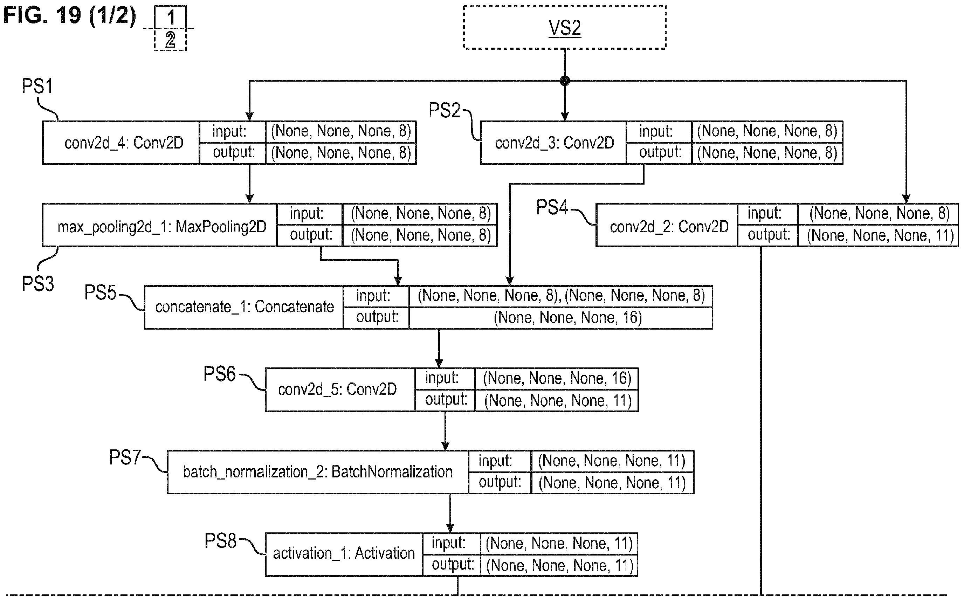

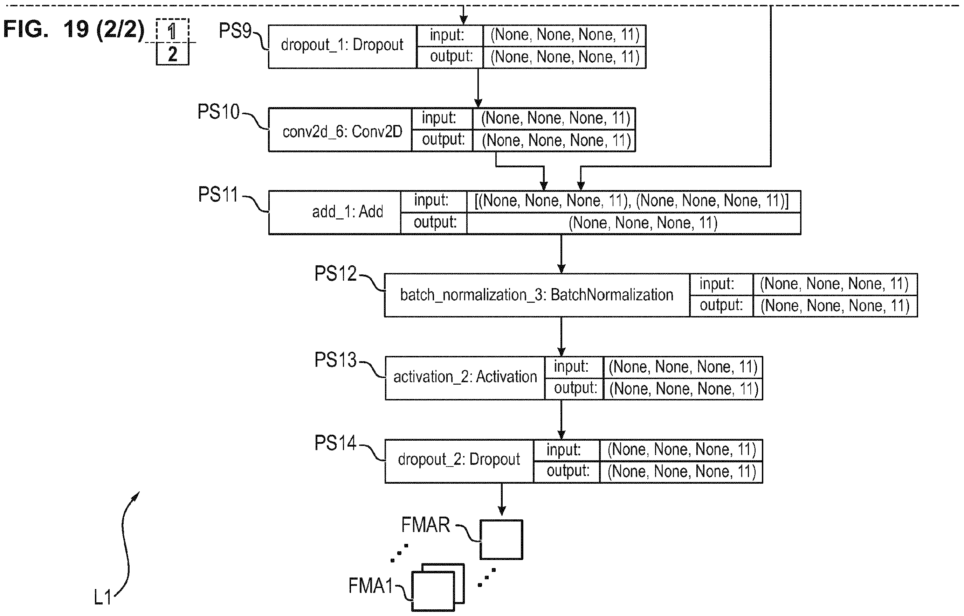

Im Detail folgen die P Layer L1,..., LP aufeinander, wobei die Figur 19 eine beispielhafte Struktur des ersten Layers L1 darlegt.

Nach dem letzten Layer LP ergeben sich beispielsweise 56 Featuremaps der Dimensionalität 8x8 Pixel. In einem abschließenden Verarbeitungsschritt AVS erfolgt dann eine Faltung mit N Faltungskerneln entsprechend der Anzahl der N Klassen bzw. der N Fluoreszenzmustertypen, um die N unterschiedlichen Featuremaps FM1,..., FMN zu generieren.

Die Figur 19 zeigt hierzu eine beispielhafte Ausführung des ersten Layers L1 aus der Figur 2. Der Vorverarbeitungsschritt VS2 ist hierbei gestrichelt dargestellt, da er nicht Gegenstand dieses Layers L1 ist sondern ihm nur vorgeschaltet ist.

Die zweidimensionalen Bildinformationen aus dem Vorverarbeitungsschritt VS2 werden jeweils an die Verarbeitungsschritte PS1, PS2, PS4 weitergeleitet. Jeder dieser Verarbeitungsschritte PS1, PS2, PS4 verarbeitet all die von dem Schritt VS2 entgegengenommenen Featuremaps für sich.

In dem Schritt PS1 erfolgt eine Faltung mit 8 Kerneln ohne Striding. In dem Schritt PS2 erfolgt eine Faltung mit 8 Kerneln mit einem Striding-Faktor 2. In dem Schritt PS4 erfolgt eine Faltung mit 11 Kerneln mit dem Striding-Faktor 2.

In einem Schritt PS3 erfolgt ein sogenanntes Max Pooling mit einem Striding-Faktor vom Wert 2 für jede der Featuremaps.

In einem Schritt PS5 werden die 8 Featuremaps aus dem Schritt PS3 mit den 8 Featuremaps aus dem Schritt PS2 konkateniert. In einem Schritt PS6 erfolgt wiederum eine Faltung der 16 eingehen Featuremaps mit 11 Kerneln ohne Striding.

In einem Schritt PS7 erfolgt eine sogenannte Batch Normalisierung auf jeder der 11 Featuremaps.

In einem Schritt PS8 erfolgt eine sogenannte Activation vorzugsweise in Form einer RELU Activation.

In einem Schritt PS9 erfolgt vorzugsweise während der Trainingsphase ein sogenanntes Dropout mit einem Dropout-Faktor von 20 %. Dieses Dropout erfolgt nicht während der Klassifikationsphase.

In einem Schritt PS10 erfolgt eine Faltung mit 11 Kernel ohne Striding.

Die Ergebnisse der Featuremaps bzw. der 11 Featuremaps aus dem Schritt PS10 werden mit den 11 Featuremaps aus dem Schritt PS4 in dem Schritt PS11 elementweise addiert, sodass wiederum der Schritt PS11 11 Featuremaps generiert. Hierbei erfolgt kein Striding.

In einem Schritt PS12 erfolgt wiederum eine sogenannte Batch Normalization.

In einem Schritt PS13 erfolgt eine sogenannte Activation vorzugsweise in Form einer RELU Activation.

In einem Schritt PS14 erfolgt dann vorzugsweise ein Dropout während der Trainingsphase mit einem Dropout-Faktor von beispielsweise 20 %.

Zurückkommend zur Figur 2 kann angemerkt werden, dass vorzugsweise P=6 derartige Layer aufeinanderfolgen, welche so dimensioniert werden, dass das letzte Layer LP mit P=6 dann Featuremaps erzeugt, welche eine Größe von 8x8 Pixeln aufweisen. Vorzugsweise erzeugt das letzte Layer LP 56 (sechsundfünfzig) verschiedene solche Featuremaps, wobei dann in einem in Figur 2 eingezeichneten Nachverarbeitungsschritt AVS eine Faltung der 56 Featuremaps mit N=8 Kernln erfolgt, um die N=8 Featuremaps FM1,..., FMN zu erzeugen.

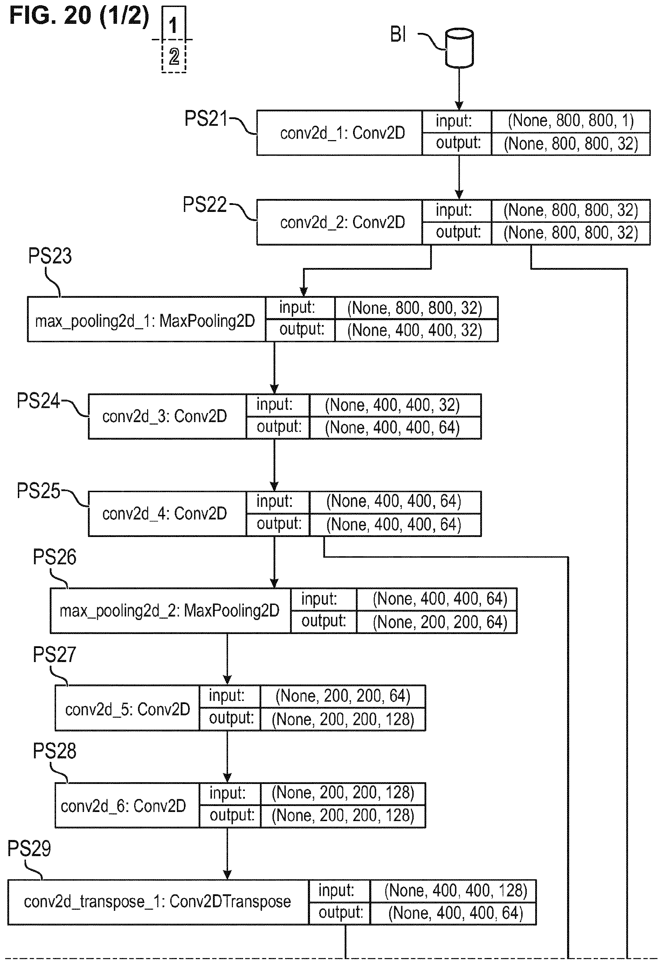

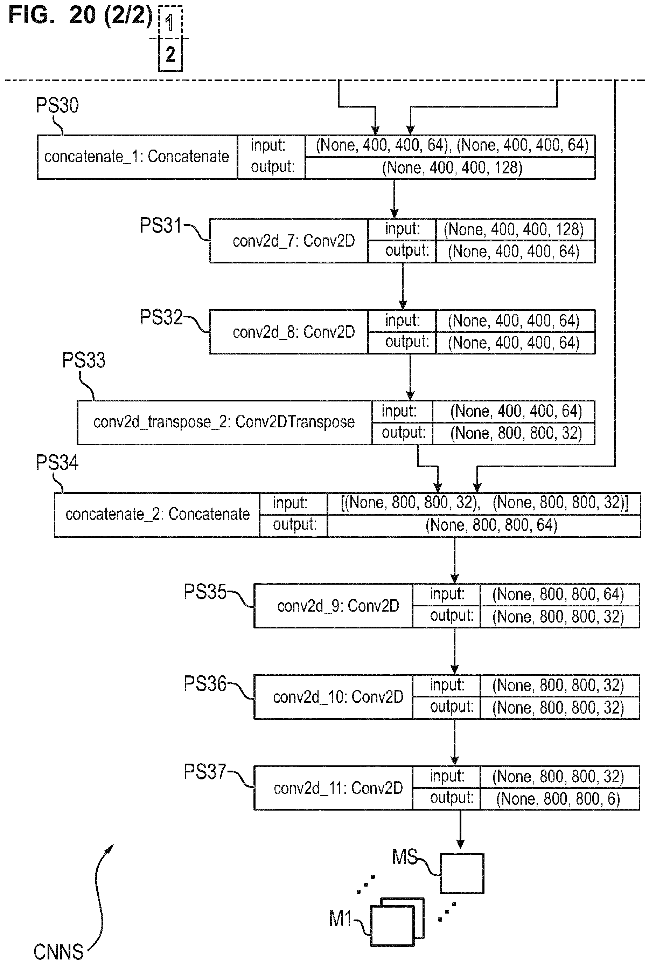

In der Figur 5 ist das Segmentierungs-Convolutional Neural Network SEG-CNN dargestellt, welches mittels der Layer LA1, LAQ eine Segmentierung des Bildes B bzw. der Bildinformation BI herbeiführt. Vorzugsweise erfolgt in einem optionalen Schritt DWS das sogenannte Downscaling. Vorzugsweise weist das Bild in Form der Bilddaten BI eine Dimensionalität von 2400×1700 Pixeln auf. Dieses Bild kann dann durch ein sogenanntes Downsampling auf eine Größe von 800×800 Pixeln reduziert werden. Die weiteren Prozessierungsschritte, welche später in der Figur 20 im Detail gezeigt werden sind für den beispielhaften Fall dargelegt, dass ein Downscaling DWS des Gesamtbildes Bildes auf eine Größe von 800×800 Pixeln erfolgte. Dieses ist aber nicht zwingend notwendig, das Convolutional Neural Network CNNS aus der Figur 20 kann auch in seiner Dimensionierung so ausgestaltet werden, dass es das Gesamtbild mit einer Größe von 2400x1700 Pixeln ohne ein Downscaling verarbeiten kann.

Die Figur 20 illustriert Details des Convolutional Neural Network CNNS aus der Figur 5. In Figur 20 erfolgt in einem ersten Schritt PS21 erfolgt eine Faltung mit 32 Kernln, welches aufgrund des Parameters 32 an dem Ausgangslayer bzw. Output-Layer abgelesen werden kann.

Daran, dass die Eingangsgröße des Schrittes PS21 eine Dimensionalität von 800×800 Pixeln aufweist und auch die Ausgangsgröße des Schrittes PS21 eine Dimensionalität von 800×800 Pixeln, kann abgeleitet werden, dass kein Striding erfolgt. Für einen Verarbeitungsschritt PS21, ..., P37 ist jeweils die Dimensionalität der Eingangsgröße als "input" in Klammern anhand der zwei Zahlen hinter der Angabe "None" angegeben. Für einen Verarbeitungsschritt PS21, ..., P37 ist ferner jeweils die Dimensionalität der Ausgangsgröße als "output" in Klammern anhand der zwei Zahlen hinter der Angabe "None" angegeben. Durch die verschiedenen Schritte PS21 bis PS37 erfolgt eine Prozessierung des Bildes bzw. der Bilddaten BI hin zu den Featuremaps M1,.., MS, wie bereits in der Figur 5 illustriert.

Anzumerken ist hierbei, dass der Schritt PS29 hierbei eine sogenannte Dekonvolution bzw. Transposed Convolution durchführt.

Die weiteren Schritte führen entweder eine Faltung durch, wie bereits im Zuge der Beschreibung der Figur 19 dargelegt, oder aber ein Max Pooling oder eine Konkatenierung, wie auch bereits im Zuge der Beschreibung zu Figur 19 dargelegt.

Erfolgte vor Prozessieren der Bilddaten BI, welche auch in der Figur 5 illustriert sind, ein sogenanntes Downsampling des Gesamtbildes B bzw. der Bilddaten BI, so kann nach Bestimmung der Segmentierungs-Map SM ein entsprechendes Upsampling erfolgen, bevor die Segmentierungs-Map SM dem weiteren Bildverarbeitungsschritt BV zugeführt wird.

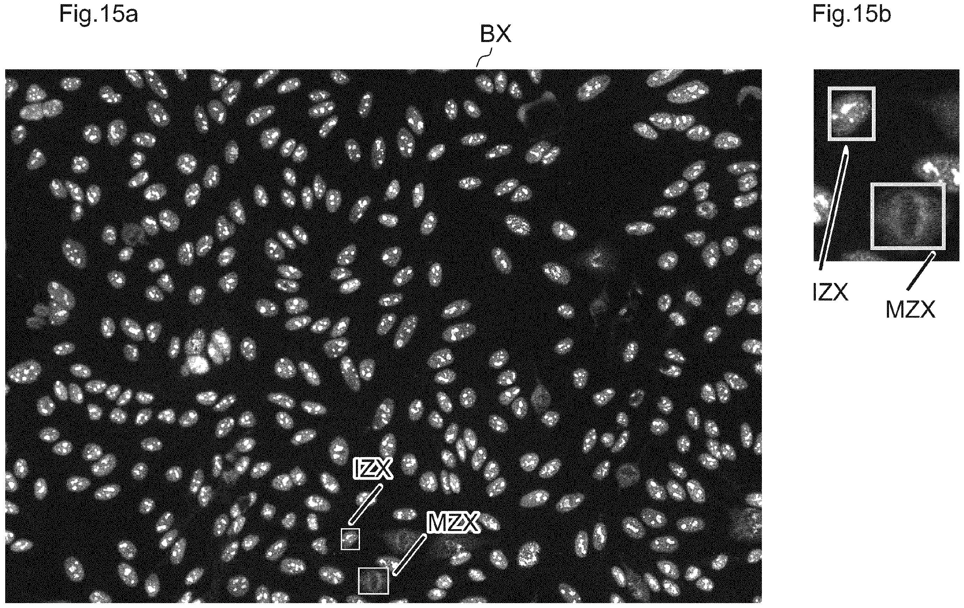

Die Figur 15a zeigt ein Bild BX als ein Fluoreszenzbild für ein Mischmuster, bei welchem ein nukleoläres Muster (AC- 8, 9,10) der Klasse n=7 vorhanden ist als auch ein Muster einer feinen oder groben Sprenkelung als der Fluoreszenzmustertyp der Klasse n=5 (AC-4, AC-5).

Beispielhaft zeigt hierzu die Figur 15b vergrößert eine Interphase-Zelle IZX als auch eine valide Mitosezelle MZX. Es ist klar zu erkennen, dass die Metaphasenplatte der validen Mitosezelle MZX nicht signifikant gefärbt ist bzw. die Mitosezelle mit ihren Chromosomen der Metaphasenplatte nicht gefärbt ist. Diese Information erlaubt es zu unterscheiden, ob eben hier ein sogenanntes fein oder grob gesprenkelte Muster (AC-4, AC-5) vorliegt oder aber ob vielleicht doch ein homogenes Muster (AC-1). Da nämlich die valide Mitosezelle MZX mit ihrer Metaphasenplatte dort im Chromosomenbereich nicht gefärbt ist kann die homogene Färbung der Klasse n=2 ausgeschlossen werden, denn bei einer homogenen Färbung müsste auch die Mitosezelle im Bereich der Metaphasenplatte homogen gefärbt sein, welches hier aber nicht der Fall ist. Daher kann durch das Einbeziehen der Mitosezelle in die Fluoreszenzmustertypdetektion sicher detektiert werden, dass es sich nicht um einen homogenen Fluoreszenzmustertyp sondern um einen fein gesprenkelten Fluoreszenzmustertyp mit n=5 (AC-4) oder aber um einen grob gesprenkelten Fluoreszenzmustertyp mit n=5 (AC-5) handelt.

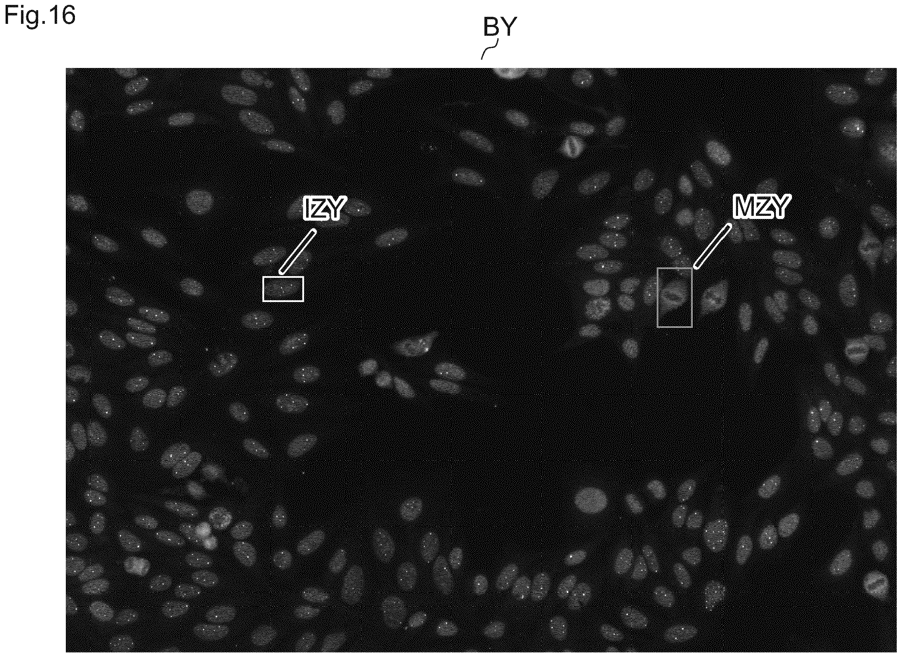

Die Figur 16 zeigt ein weiteres Beispiel BY eines Fluoreszenzbildes unter einer Hervorhebung einer validen Mitosezelle MZY als auch einer Interphase-Zelle IZY.

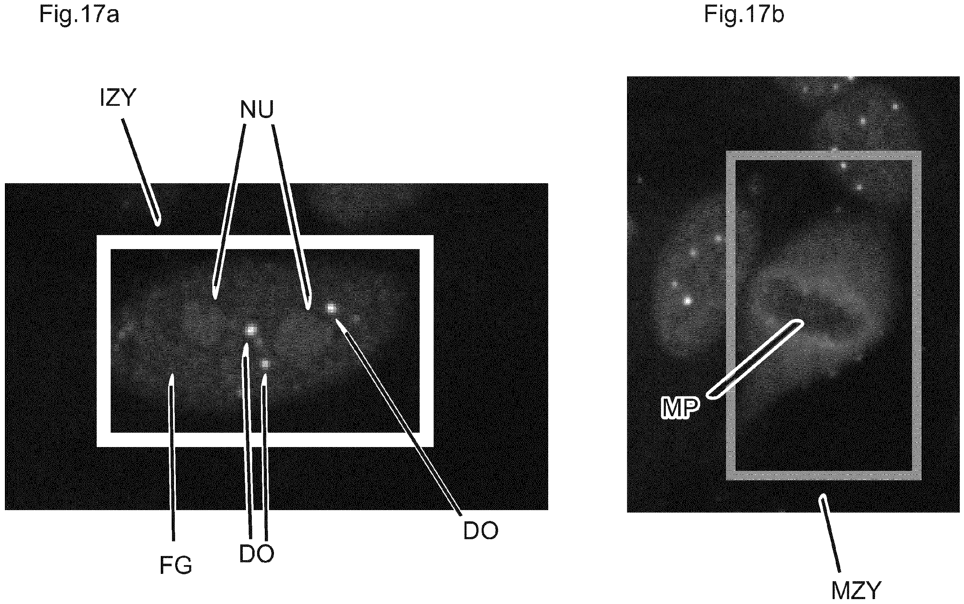

Die Figur 17a zeigt hierzu in vergrößerter Darstellung diese Interphase-Zelle IZY und in der Figur 17b die entsprechende valide Mitosezelle MZY mit ihrer Metaphasenplatte MP.

Es handelt sich bei dem Bild BY aus der Figur 16 um ein Bild mit drei präsenten Fluoreszenzmustertypen. In diesem Fluoreszenzmusterbild ist der Fluoreszenzmustertyp n=7, auch nukleolär genannt (AC-8, 9,10), präsent, ferner der Fluoreszenzmustertyp n=6, auch nukleäre Punkte genannt (AC-6,7), als auch der Fluoreszenzmustertyp n=5, auch feingesprenkelt genannt (AC-4), als eine der Variante des Fluoreszenzmustertyps n=5 (AC-4, AC-5). Die Figur 17a indiziert hierzu die Färbung des Musters nukleolär durch die Bereiche NU, die Färbung des Musters nukleolärer Punkte durch die Bereiche DO und auch die Färbung durch das fein gesprenkelte Muster durch den weiteren Bereich FG des Zellkerns.

Hierbei ist es gerade vorteilhaft, dass gemäß des erfindungsgemäßen Verfahrens auch die Mitosezelle MZY in einem Teilbild vorhanden sein muss, da die Metaphasenplatte MP eben nicht gefärbt ist bzw. deren Chromosomen nicht gefärbt sind, sodass hier der Bereich der feinen Sprenkelung FG sicher als fein gesprenkelt (AC-4) mit n=5 detektiert werden kann und nicht fälschlicherweise als homogen gefärbt angesehen wird, wie es bei dem homogenen Muster n=2 (AC-1) der Fall sein könnte, da bei diesem homogenen Muster die Metaphasenplatte MP signifikant gefärbt sein müsste. Ebenso kann hier eine Musterfärbung des Typs "dicht fein gesprenkelt" mit n=4 (AC-2) ausgeschlossen werden, da bei diesem Fluoreszenzmustertyp die Metaphasenplatte MP der Mitosezelle MZY signifikant gefärbt sein müsste.

Hierdurch zeigt sich hier noch einmal, dass das erfindungsgemäße Verfahren, bei welchem Teilbilder abhängig davon selektiert werden, ob sie Bildsegmente mit wenigstens einer validen mitotischen Zelle in einem Metaphasenstadium, selektiert werden, eine besonders hohe Güte eine Detektion unterschiedlicher Fluoreszenzmustertyp ermöglicht.

Wie bereits zuvor erläutert, erfolgt vorzugsweise das Segmentieren des Gesamtbildes zur Bestimmung des segmentierten Bildes mittels eines von dem bisher genannten Convolutional Neural Network separaten Netzwerkes, insbesondere eines weiteren, separaten und vortrainierten Convolutional Neural Networks. Klassische Bildverarbeitungsverfahren, z.B. Schwellwertverfahren nach Otsu, sind nur begrenzt leistungsfähig.

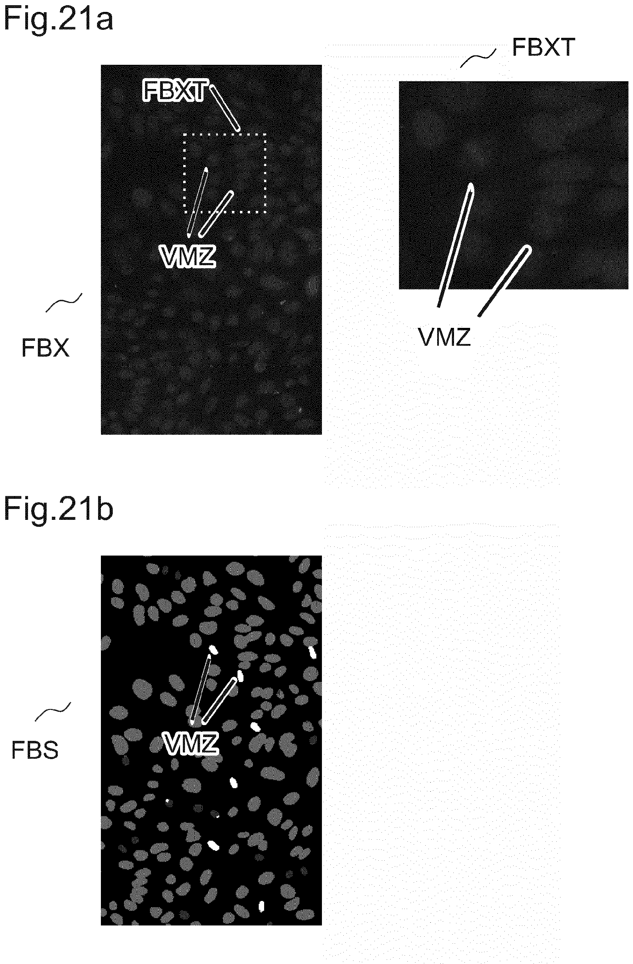

Figur 21a zeigt zur Illustration ein Fluoreszenzbild FBX, welches in einem Teilbereich FBXT zwei valide Mitosezellen VMZ aufweist, welche insbesondere in einem validen Mitosestadium sind und eine Metaphasenplatte zeigen. Wie bereits zuvor erläutert, müssen solche Mitosezellen sicher in dem Segmentierungsschritt erkannt werden. Aufgrund der nur sehr schwach unterschiedlichen Färbung der Metaphasenplatte gegenüber anderen Bereichen wie z.B. dem Zytoplasma, ist eine sichere Detektion dieser Zellen VMZ mittels eines Schwellwertverfahrens schwierig. Die Figur 21b zeigt ein Segmentierungsergebnis FBS nach dem hier vorgeschlagenen Verfahren mittels eines Convolutional Neural Network, welches als weiße Bereiche sehr gut die validen Mitosezellen bzw. deren Metaphasenplatten detektiert hat. Es wird also deutlich, dass die Verwendung eines Convolutional Neural Network für die Aufgabe des Segmentierens deutliche Vorteile gegenüber klassischen Bildverarbeitungsverfahren aufweist.

Das erfindungsgemäße Verfahren wurde hier beschrieben, indem in einem Schritt SC2 aus der Figur 1 das Gesamtbild erfasst wird. Es wird daher eben ein Verfahren zur Detektion jeweiliger potentieller Präsenzen jeweiliger unterschiedlicher zellulärer Fluoreszenzmustertypen auf einem biologischen Zellsubstrat aufweisend humane Epitheliomzellen mittels digitaler Bildverarbeitung vorgeschlagen, welches mit dem Schritt des Erfassens des Gesamtbildes beginnt.

Alternativ zu dem Schritt SC2 des Erfassens des Gesamtbildes kann auch ein Verfahren zur digitalen Bildverarbeitung entsprechend und in analoger Weise durchgeführt werden, bei welchem in einem entsprechenden Schritt ein solches Gesamtbild in Datenform bereitgestellt bzw. entgegengenommen wird. Es werden dann in dem Verfahren der digitalen Bildverarbeitung ferner die weiteren Schritte SC2A, SC3, SC4, SC5 durchgeführt.

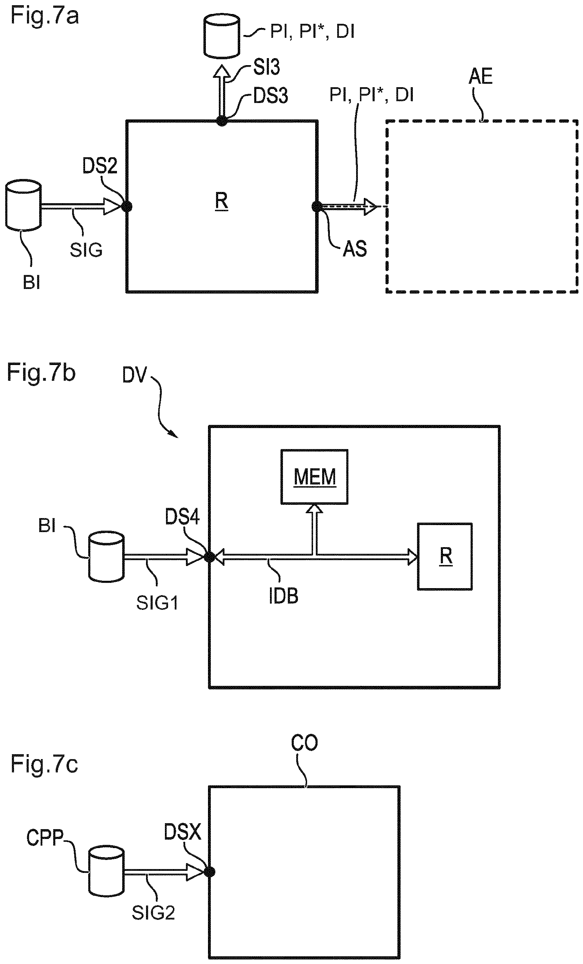

Hierzu zeigt die Figur 7A eine vorgeschlagene Recheneinheit R, welche ein entsprechendes Bild B bzw. eine Bildinformation BI in Form eines Datensignals SIG über eine Schnittstelle DS2 entgegennimmt. Die Recheneinheit R kann dann vorzugsweise über eine Ausgabeschnittstelle AS, insbesondere an eine Anzeigeeinheit AE, die ermittelten Konfidenzmaße PI, die verifizierten Konfidenzmaße PI* und/oder die Detektionsinformation DI ausgeben.

Diese Informationen können vorzugsweise auch über eine Datenschnittstelle DS3 in Form einer Datennetzwerkschnittstelle in Form eines Signals SI3 ausgegeben werden.

Die Figur 7B zeigt hierzu eine vorgeschlagene Datennetzwerkvorrichtung, welche über eine Schnittstelle S4 und ein entsprechendes Datensignal SIG1 das Bild beziehungsweise die Bildinformation BI entgegennimmt. Die Datennetzwerkvorrichtung weist ferner vorzugsweise einen internen Datenbus IDB auf, welcher eine zuvor beschriebene Recheneinheit R mit vorzugsweise einer Speichereinheit MEM verbindet.

Die Figur 7C illustriert ein vorgeschlagenes Computerprogrammprodukt CPP, welches Befehle umfasst, die bei der Ausführung des Programms durch einen Computer diesen veranlassen, das vorgeschlagene Verfahren zur digitalen Bildverarbeitung durchzuführen. Dieses Computerprogrammprodukt kann beispielsweise in vorgeschlagener Weise über ein Datensignal SIG2 bereitgestellt werden beziehungsweise übertragen werden. Diese Übertragung kann zu einem Computer CO beziehungsweise an eine Datenstelle DSX des Computers CO erfolgen.

Die Figur 6 illustriert ein Ausführungsbeispiel der erfindungsgemäßen Vorrichtung V1. Die Vorrichtung V1 weist eine Haltevorrichtung HL für das Substrat SU auf. Anregungslicht AL einer Anregungslichtquelle LQ wird über ein optisches Filter F1 vorgefiltert und dann mittels eines dichroitischen Spiegels SP1 durch eine Optik O hin zum Substrat geleitet. Entstehende Fluoreszenzstrahlung bzw. entstehendes Fluoreszenzlicht FL tritt dann vom Substrat SU her zurück durch das Objektiv O durch den dichroitischen Spiegel SP1 und durch ein optisches Filter F2 hindurch. Das optische Filter F2 filtert eine Wellenlänge der Anregungsstrahlung bzw. des Anregungslichtes AL heraus. Das Fluoreszenzlicht FL wird dann einer Bilderfassungseinheit in Form einer Kamera K zugeführt. Über einen optischen Filter FG, welcher die Fluoreszenzstrahlung in einem vorzugsweise grünen Farbkanal transmittieren lässt, wird das Fluoreszenzlicht FL der Bilderfassungseinheit K zugeführt. Die Bildererfassungseinheit K erfasst das Fluoreszenzbild bzw. das Gesamtbild.

Eine Recheneinheit R ist ausgebildet, das Fluoreszenzbild in Form digitaler Bilddaten BI entgegenzunehmen. Die Recheneinheit R ist ferner ausgebildet, mittels Segmentieren des Gesamtbildes ein segmentiertes Bild zu bestimmen, in dem segmentierten Bild jeweilige Bildsegmente zu detektieren, welche jeweils eine mitotische Zelle repräsentieren, Teilbilder des Gesamtbildes, welche jeweils wenigstens eine mitotische Zelle aufweisen, und dazu korrespondierende Teilbilder des segmentierten Bildes auf Basis der detektierten Bildsegmente zu selektieren und auf Basis der selektierten Teilbilder des Gesamtbildes und der selektierten Teilbilder des segmentierten Bildes jeweilige tatsächliche Präsenzen jeweiliger der zellulären Fluoreszenzmustertypen mittels eines Convolutional Neural Network zu detektieren.

Über eine Datenschnittstelle DS1 kann die Vorrichtung V1 ein Detektionsergebnis in Form von einer Detektionsinformation DI und/oder eine Präsenzinformation bzw. eine Prädiktionsinformation PI, PI* bereitstellen.

Obwohl manche Aspekte im Zusammenhang mit einer Vorrichtung beschrieben wurden, versteht es sich, dass diese Aspekte auch eine Beschreibung der entsprechenden Verfahren darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung die Recheneinheit R oder die Datennetzwerkvorrichtung DV in Hardware und/oder in Software umsetzen. Eine Umsetzung einer hier genannten Recheneinheit R kann hier als wenigstens eine Recheneinheit erfolgen oder aber durch mehrere Recheneinheiten im Verbund. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann als Recheneinheit durch einen Prozessor, einen Computerprozessor (CPU = Central Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird.

Allgemein können Ausführungsbeispiele oder Teile der Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren oder ein Teil eines Verfahrens durchzuführen, wenn das Programm auf einem Prozessor oder einer programmierbaren Hardwarekomponente abläuft.

Für eine Implementation eines oder mehrerer Ausführungsbeispiele der hier vorgeschlagenen Convolutional Neural Networks kann ein Fachmann auf eine sogenannte Open Source Deep-Learning Bibliothek namens "Keras" zurückgreifen. Detaillierte Informationen findet der Fachmann unter https://keras.io .

**Beispiel 1**

Das vorgegebene System bzw. das erfindungsgemäße Verfahren wurde auf 196 unterschiedlichen Patientenproben getestet, dabei wurden die Proben in einer linearen Verdünnungsreihe startend von 1:100 ausverdünnt. Das heißt, die Patientenproben wurden beginnend von 1:100 in einer steigenden Folge ausverdünnt und inkubiert. In diesem Falle wurden Proben in unterschiedlichen Schritten aus der Reihe 1:100, 1:320, 1:1.000, 1:3.200, 1:10.000, 1:32.000, 1:100.000, 1:320.000, 1:1.000.000 verdünnt. Das System ist jedoch in keiner Weise auf vorgegebene Verdünnungsreihen beschränkt.

Ein Muster wurde durch einen Experten bezogen auf eine bestimmte Probe als präsent erklärt, wenn es in irgendeiner Verdünnung bzw. irgendeinem Fluoreszenzbild bezogen auf die bestimmte Probe als präsent erkannt wurde. Das Muster musste nicht in allen Verdünnungen bzw. allen Fluoreszenzbildern bezogen auf die bestimmte Probe durch den Experten erkannt werden, um als präsent erklärt zu werden.

Ein Muster wurde durch einen Experten bezogen auf eine bestimmte Probe als negativ (kein Muster aufweisend) erklärt, wenn es in allen Verdünnungen bzw. in allen Fluoreszenzbildern bezogen auf die bestimmte Probe als negativ (kein Muster aufweisend) erkannt wurde.

Ein Muster wurde durch das erfindungsgemäße Verfahren bezogen auf eine bestimmte Probe als generell präsent detektiert, wenn es in irgendeiner Verdünnung bzw. irgendeinem Fluoreszenzbild bezogen auf die bestimmte Probe als präsent detektiert wurde. Das Muster musste nicht durch das erfindungsgemäße Verfahren in allen Verdünnungen bzw. allen Fluoreszenzbildern bezogen auf die bestimmte Probe detektiert werden, um generell als präsent detektiert zu werden.

Ein Muster wurde durch das erfindungsgemäße Verfahren bezogen auf eine bestimmte Probe als negativ (kein Muster aufweisend) detektiert, wenn es in allen Verdünnungen bzw. allen Fluoreszenzbildern bezogen auf die bestimmte Probe als negativ (kein Muster aufweisend) detektiert wurde.

Bei einer Präsenz von beispielsweise zwei unterschiedlichen tatsächlich präsenten Mustern wurden die beiden Muster durch einen Experten auch dann als beide präsent erklärt, wenn er die beiden Muster in unterschiedlichen Verdünnungen bzw. unterschiedlichen Fluoreszenzbildern einer gleichen Probe erkannte.

Bei einer Präsenz von beispielsweise zwei unterschiedlichen tatsächlich präsenten Mustern wurden die beiden Muster durch das erfindungsgemäße Verfahren auch dann als beide präsent detektiert, wenn das Verfahren die beiden Muster in unterschiedlichen Verdünnungen bzw. unterschiedlichen Fluoreszenzbildern einer gleichen Probe detektierte.

Wurde also beispielsweise das Muster Homogene in der Verdünnung 1:100 detektiert und ein anderes Muster in einer anderen Ausverdünnung, beispielsweise 1:320, werden für diese Probe beide Muster ausgegeben.

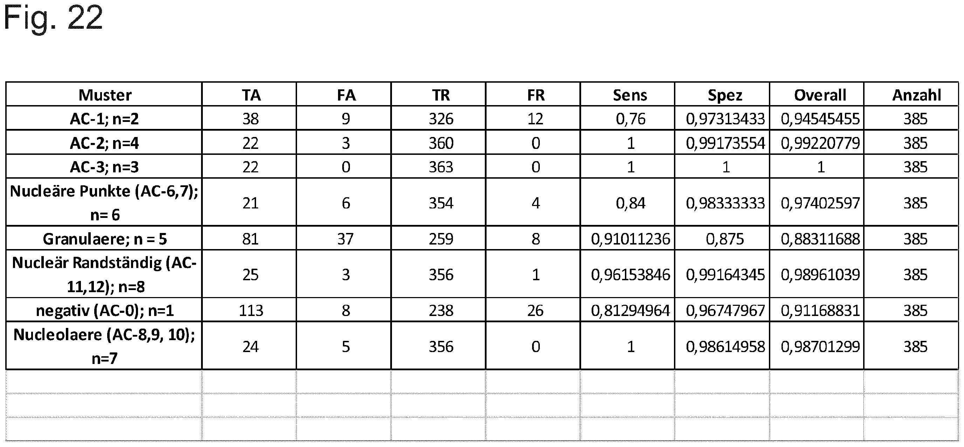

Die in der Tabelle aus Figur 22 stehenden Erkennungsraten beziehen sich auf eine gesamte Patientenprobe aller Ausverdünnungen. Die Tabelle 1 zeigt für unterschiedliche Muster als auch den Fall einer negativen Probe jeweils die folgenden Kennwerte:

- TA: "True Acceptance", dies ist die Anzahl der Proben, bei welchen in irgendeiner Verdünnung ein Experte für dieses Muster auf präsent entschieden hat und bei welchen das System in wenigstens einer Verdünnung für dieses Muster auf präsent entschieden hat.

- FA: "False Acceptance", dies ist die Anzahl der Proben, bei welchen in allen Verdünnung ein Experte für dieses Muster auf nicht präsent entschieden hat und bei welchen das System in wenigstens einer Verdünnung für dieses Muster auf präsent entschieden hat.

- TR: "True Rejection", dies ist die Anzahl der Proben, bei welchen in allen Verdünnungen ein Experte für dieses Muster auf nicht präsent entschieden hat und bei welchen das System in allen Verdünnungen für dieses Muster auf nicht präsent entschieden hat.

- FR: "False Rejection", dies ist die Anzahl der Proben, bei welchen in irgendeiner Verdünnung ein Experte für dieses Muster auf präsent entschieden hat und bei welchen das System in wenigstens allen Verdünnungen für dieses Muster auf nicht präsent entschieden hat.

- Sens: Sensitivität des Systems als Absolutzahl.

- Spez: Spezifität als Absolutzahl.

- Overall: Die zusammengefasste Übereinstimmung als Absolutzahl

Die Ergebnisse ergeben sich durch die Anwendung des kompletten Systems, sprich Segmentierungsnetzwerk, Klassifikationsnetzwerk, Anwendung von Schwellenwerten der Wahrscheinlichkeiten der einzelnen Muster sowie Anwendung der Schwellenwerte der Helligkeiten der einzelnen Muster.

Das Convolutional Neural Network für die Erkennung einer Präsenz der Muster nutzte insgesamt 95661 Teilbild-Tupel für das Training, davon 71649 zum eigentlichen Training, und 24012 für eine separate Validierung. Für das Convolutional Neural Network für die Segmentierung standen insgesamt 5509 Bilder für das Training zur Verfügung, davon 4131 in der eigentlichen Trainingsmenge und 1378 in einer Validierungsmenge.

Die inkubierten Substrate waren zu 50% Substrate des Types FA 1520-0110 und zu 50% Substrate des Typs FA 1522-0110, erhältlich bei EUROIMMUN Medizinische Labordiagnostika. Die Fluoreszenzbilder der Substrate wurden mit dem Gerät "EUROPattern Microscope Live" aufgenommen.

**EP 4 030 340 B1**

**Patentansprüche**

1. Verfahren zur Detektion jeweiliger potentieller Präsenzen jeweiliger unterschiedlicher zellulärer Fluoreszenzmustertypen auf einem biologischen Zellsubstrat (SU) aufweisend humane Epitheliomzellen,

   wobei die zellulären Fluoreszenzmustertypen mehrere unterschiedliche antinukleäre Antikörper-Fluoreszenzmustertypen umfassen,
   das Verfahren aufweisend

   - Inkubieren des Zellsubstrates (SU) mit einer flüssigen Patientenprobe, welche potentiell primäre Antikörper aufweist, sowie ferner mit sekundären Antikörpern, welche mit einem Fluoreszenzfarbstoff markiert sind,
   - Erfassen eines Gesamtbildes (B), welches eine Färbung des Zellsubstrates (SU) durch den Fluoreszenzfarbstoff repräsentiert,
   - Bestimmen eines segmentierten Bildes (SB) mittels Segmentieren des Gesamtbildes (B),
   - Detektieren jeweiliger Bildsegmente in dem segmentierten Bild (SB), wobei ein jeweiliges Bildsegment eine jeweilige Metaphasenplatte einer Mitosezelle in einem Stadium der Metaphase repräsentiert, **gekennzeichnet durch**:

     - Selektieren von Teilbildern (TB11) des Gesamtbildes (B), welche jeweils wenigstens eine mitotische Zelle (VMZ) aufweisen, und Selektieren von dazu korrespondierenden Teilbildern (TB12) des segmentierten Bildes (SB) auf Basis der detektierten Bildsegmente (VMZ) und
     - Detektieren jeweiliger tatsächlicher Präsenzen jeweiliger der zellulären Fluoreszenzmustertypen mittels eines Convolutional Neural Network (CNN2) auf Basis der selektierten Teilbilder (TB11) des Gesamtbildes (B) und der selektierten Teilbilder (TB12) des segmentierten Bildes (SB),

   wobei das Convolutional Neural Network (CNN2) jeweils ein Tupel von Teilbildern, welches wenigstens ein selektiertes Teilbild des Gesamtbildes und ein dazu korrespondierendes selektiertes Teilbild des segmentierten Bildes aufweist, gleichzeitig verarbeitet.

2. Verfahren nach Anspruch 1,
   ferner aufweisend

   - Detektieren jeweiliger Bildsegmente (VMZ), welche jeweils eine mitotische Zelle einer hinreichenden Qualität repräsentieren, in dem Gesamtbild (B) auf Basis des segmentierten Bildes (SB),
   wobei eine mitotische Zelle (VMZ) dann von hinreichender Qualität ist, wenn sie sich in einem validen Mitosestadium befindet, nämlich der Metaphase,
   - Selektieren von Teilbildern (TB11) des Gesamtbildes (B) und dazu korrespondierenden Teilbildern (TB12) des segmentierten Bildes (SB) auf Basis der detektierten Bildsegmente (VMZ), welche jeweils wenigstens eine mitotische Zelle (VMZ) einer hinreichenden Qualität repräsentieren.

3. Verfahren nach Anspruch 1,
   ferner aufweisend

   - Bestimmen jeweiliger Konfidenzmaße (PI, PI*) für die jeweiligen tatsächlichen Präsenzen der jeweiligen Fluoreszenzmustertypen mittels des Convolutional Neural Network (CNN2) auf Basis der selektierten Teilbilder (TB11) des Gesamtbildes (B) und der selektierten Teilbilder (TB12) des segmentierten Bildes (SB).

4. Verfahren nach Anspruch 3,

   wobei das Convolutional Neural Network (CNN2) ein Ausgabe-Layer (LP, AVS) aufweist, welches für einen jeweiligen zellulären Fluoreszenzmustertypen eine jeweilige Feature-Map (FM1,..., FMN) generiert, und wobei das Convolutional Neural Network (CNN2) ein jeweiliges Konfidenzmaß (P1,..., PN) auf Basis einer jeweiligen Feature-Map (FM1,..., FMN) bestimmt.

5. Verfahren nach Anspruch 3,
   ferner aufweisend

   - Segmentieren des Gesamtbildes (B) in Bildsegmente unterschiedlicher Segmentklassen,

- Bestimmen wenigstens eines Helligkeitswertes (HI) für wenigstens einen Fluoreszenzmustertypen basierend auf einem oder mehreren Bildsegmenten wenigstens einer bestimmten Segmentklasse und
- Verifizieren des Konfidenzmaßes (PI, PI*) des wenigstens einen Fluoreszenzmustertypen auf Basis des Helligkeitswertes (HI) des wenigstens einen Fluoreszenzmustertypen.

6. Verfahren nach Anspruch 5,
wobei das Verifizieren des Konfidenzmaßes (PI, PI*) auf Basis des Helligkeitswertes (HI) und in Abhängigkeit eines durch einen Nutzer vorgebbaren Schwellenwertes (H1,...,HN) erfolgt.

7. Verfahren nach Anspruch 3,
ferner aufweisend, für ein jeweiliges Teilbild-Tupel (TB11, TB12), welches ein Teilbild (TB11) des Gesamtbildes (B) und ein korrespondierendes Teilbild (TB12) des segmentierten Bildes (SB) aufweist,

- Bestimmen jeweiliger Teilbild-Konfidenzmaße (PI1,...,PI3) für jeweilige tatsächliche Teilbild-Präsenzen jeweiliger zellulärer Fluoreszenzmustertypen mittels des Convolutional Neural Network (CNN2)
- und Bestimmen der jeweiligen Konfidenzmaße für die jeweiligen tatsächlichen Präsenzen der jeweiligen Fluoreszenzmustertypen auf Basis der Teilbild-Konfidenzmaße.

8. Verfahren nach Anspruch 1,
ferner aufweisend

- Aufteilen des Gesamtbildes (B) in eine Menge von Teilbildern (TBA,..., TBD) nach einem vorgegebenen Aufteilungsschema,
- Selektieren von Teilbildern (TBA, TBC) des Gesamtbildes (B) auf Basis der detektierten Bildsegmente und Selektieren von dazu korrespondierenden Teilbildern des segmentierten Bildes (SB)
- und Detektieren jeweiliger tatsächlicher Präsenzen jeweiliger der zellulären Fluoreszenzmustertypen mittels des Convolutional Neural Network (CNN2) auf Basis der selektierten Teilbilder des Gesamtbildes und auf Basis der selektierten Teilbilder des segmentierten Bildes.

9. Vorrichtung (V1) zur Detektion jeweiliger potentieller Präsenzen jeweiliger unterschiedlicher zellulärer Fluoreszenzmustertypen auf einem biologischen Zellsubstrat aufweisend humane Epitheliomzellen mittels digitaler Bildverarbeitung, aufweisend

- eine Haltevorrichtung (HL) für das biologische Substrat (SU), welches mit einer flüssigen Patientenprobe, welche potentiell primäre Antikörper aufweist, sowie ferner mit sekundären Antikörpern, welche mit einem Fluoreszenzfarbstoff markiert sind, inkubiert wurde,
- ferner wenigstens eine Bilderfassungseinheit (K) zum Erfassen eines Gesamtbildes (B), welches eine Färbung des Zellsubstrates durch den Fluoreszenzfarbstoff repräsentiert, wenigstens eine Recheneinheit (R), welche ausgebildet ist
- mittels Segmentieren des Gesamtbildes (B) ein segmentiertes Bild (SB) zu bestimmen, in dem segmentierten Bild (SB) jeweilige Bildsegmente (VMZ) zu detektieren, wobei ein jeweiliges Bildsegment eine jeweilige Metaphasenplatte einer Mitosezelle in einem Stadium der Metaphase repräsentiert, und **gekennzeichnet dadurch, dass** die Recheneinheit ferner ausgebildet ist:

- Teilbilder (TB11) des Gesamtbildes (B), welche jeweils wenigstens eine mitotische Zelle aufweisen, und dazu korrespondierende Teilbilder (TB12) des segmentierten Bildes (SB) auf Basis der detektierten Bildsegmente zu selektieren und auf Basis der selektierten Teilbilder (TB11) des Gesamtbildes (B) und der selektierten Teilbilder (TB12) des segmentierten Bildes (SB) jeweilige tatsächliche Präsenzen jeweiliger der zellulären Fluoreszenzmustertypen mittels eines Convolutional Neural Network (CNN2) zu detektieren, wobei das Convolutional Neural Network (CNN2) jeweils ein Tupel von Teilbildern, welches wenigstens ein selektiertes Teilbild des Gesamtbildes und ein dazu korrespondierendes selektiertes Teilbild des segmentierten Bildes aufweist, gleichzeitig verarbeitet.

10. Verfahren zur Detektion jeweiliger potentieller Präsenzen jeweiliger unterschiedlicher zellulärer Fluoreszenzmustertypen auf einem biologischen Zellsubstrat aufweisend humane Epitheliomzellen mittels digitaler Bildverarbeitung, aufweisend

- Erfassen eines Gesamtbildes (B), welches eine Färbung des Zellsubstrates durch den Fluoreszenzfarbstoff repräsentiert,
- Bestimmen eines segmentierten Bildes (SB) mittels Segmentieren des Gesamtbildes (B),
- Detektieren jeweiliger Bildsegmente (VMZ) in dem segmentierten Bild (SB), wobei ein jeweiliges Bildsegment eine jeweilige Metaphasenplatte einer Mitosezelle in einem Stadium der Metaphase repräsentiert, **gekennzeichnet durch**:

- Selektieren von Teilbildern (TB11) des Gesamtbildes (B), welche jeweils wenigstens eine mitotische Zelle aufweisen, und dazu korrespondierenden Teilbildern des segmentierten Bildes auf Basis der detektierten Bildsegmente (VMZ) und
Detektieren jeweiliger tatsächlicher Präsenzen jeweiliger der zellulären Fluoreszenzmustertypen mittels eines Convolutional Neural Network (CNN2) auf Basis der selektierten Teilbilder des Gesamtbildes und der selektierten Teilbilder des segmentierten Bildes, wobei das Convolutional Neural Network (CNN2) jeweils ein Tupel von Teilbildern, welches wenigstens ein selektiertes Teilbild des Gesamtbildes und ein dazu korrespondierendes selektiertes Teilbild des segmentierten Bildes aufweist, gleichzeitig verarbeitet.

**11.** Verfahren zur digitalen Bildverarbeitung,
aufweisend

- Entgegennehmen eines Gesamtbildes (B), welches eine Färbung eines biologischen Zellsubstrates durch einen Fluoreszenzfarbstoff repräsentiert, wobei das biologische Zellsubstrat humane Epitheliomzellen aufweist,
- Bestimmen eines segmentierten Bildes (SB) mittels Segmentieren des Gesamtbildes (B),
- Detektieren jeweiliger Bildsegmente (VMZ) in dem segmentierten Bild (SB), wobei ein jeweiliges Bildsegment eine jeweilige Metaphasenplatte einer Mitosezelle in einem Stadium der Metaphase repräsentiert, **gekennzeichnet durch**:

- Selektieren von Teilbildern (TB11) des Gesamtbildes (B), welche jeweils wenigstens eine mitotische Zelle aufweisen, und dazu korrespondierenden Teilbildern (TB12) des segmentierten Bildes (SB) auf Basis der detektierten Bildsegmente (VMZ) und
Detektieren jeweiliger tatsächlicher Präsenzen jeweiliger der zellulären Fluoreszenzmustertypen mittels eines Convolutional Neural Network (CNN2) auf Basis der selektierten Teilbilder des Gesamtbildes und der selektierten Teilbilder des segmentierten Bildes, wobei das Convolutional Neural Network (CNN2) jeweils ein Tupel von Teilbildern, welches wenigstens ein selektiertes Teilbild des Gesamtbildes und ein dazu korrespondierendes selektiertes Teilbild des segmentierten Bildes aufweist, gleichzeitig verarbeitet.

**12.** Recheneinheit (R), welche ausgebildet ist im Zuge einer digitalen Bildverarbeitung

- ein Gesamtbild (B) entgegenzunehmen, welches eine Färbung eines biologischen Zellsubstrates durch einen Fluoreszenzfarbstoff repräsentiert, wobei das biologische Zellsubstrat humane Epitheliomzellen aufweist,
- mittels Segmentieren des Gesamtbildes (B) ein segmentiertes Bild (SB) zu bestimmen,
in dem segmentierten Bild (SB) jeweilige Bildsegmente (VMZ) zu detektieren, wobei ein jeweiliges Bildsegment eine jeweilige Metaphasenplatte einer Mitosezelle in einem Stadium der Metaphase repräsentiert, **dadurch gekennzeichnet, dass** die Recheneinheit ferner ausgebildet ist,
- Teilbilder (TB11) des Gesamtbildes (B), welche jeweils wenigstens eine mitotische Zelle aufweisen, und dazu korrespondierende Teilbilder (TB12) des segmentierten Bildes (SB) auf Basis der detektierten Bildsegmente zu selektieren und
auf Basis der selektierten Teilbilder (TB11) des Gesamtbildes (B) und der selektierten Teilbilder (TB12) des segmentierten Bildes (SB) jeweilige tatsächliche Präsenzen jeweiliger der zellulären Fluoreszenzmustertypen mittels eines Convolutional Neural Network (CNN2) zu detektieren, wobei das Convolutional Neural Network (CNN2) jeweils ein Tupel von Teilbildern, welches wenigstens ein selektiertes Teilbild des Gesamtbildes und ein dazu korrespondierendes selektiertes Teilbild des segmentierten Bildes aufweist, gleichzeitig verarbeitet.

**13.** Datennetzwerkvorrichtung (DV), aufweisend

wenigstens eine Datenschnittstelle (DS4) zum Entgegennehmen eines Gesamtbildes (B), welches eine Färbung eines biologischen Zellsubstrates durch einen Fluoreszenzfarbstoff repräsentiert, wobei das biologische Zellsubstrat humane Epitheliomzellen aufweist,
**gekennzeichnet durch** eine Recheneinheit (R) nach Anspruch 12.

14. Computerprogrammprodukt (CPP),
    umfassend Befehle, die bei der Ausführung des Programms durch einen Computer (CO) diesen veranlassen, das Verfahren zur digitalen Bildverarbeitung nach Anspruch 11 durchzuführen.

15. Datenträgersignal (SIG2), welches das Computerprogrammprodukt (CPP) nach Anspruch 14 überträgt.


**Claims**

1. Method for detecting respective potential presences of respective different cellular fluorescence pattern types on a biological cellular substrate (SU) comprising human epithelioma cells,

   wherein the cellular fluorescence pattern types comprise a plurality of different antinuclear antibody fluorescence pattern types,
   the method comprising

   - incubating the cellular substrate (SU) with a liquid patient sample which potentially comprises primary antibodies and, furthermore, with secondary antibodies which have been labelled with a fluorescent dye,
   - acquiring a total image (B) which represents staining of the cellular substrate (SU) due to the fluorescent dye,

   **characterized by**

   - determining a segmented image (SB) by means of segmentation of the total image (B),
   - detecting in the segmented image (SB) respective image segments wherein a respective image segment represents a respective metaphase plate of a mitosis cell in a metaphase stage,
   - selecting sub-images (TB11) of the total image (B) which each comprise at least one mitotic cell (VMZ) and selecting corresponding sub-images (TB12) of the segmented image (SB) on the basis of the detected image segments (VMZ) and
   - detecting respective actual presences of the respective cellular fluorescence pattern types by means of a convolutional neural network (CNN2) on the basis of the selected sub-images (TB11) of the total image (B) and the selected sub-images (TB12) of the segmented image (SB),

   wherein the convolutional neural network (CNN2) processes, in each case, a tuple of sub-images at the same time, which comprises at least one selected sub-image of the total image and a corresponding selected sub-image of the segmented image.

2. Method according to Claim 1,
   further comprising

   - detecting in the total image (B), on the basis of the segmented image (SB), respective image segments (VMZ) which each represent a mitotic cell of sufficient quality,
   wherein a mitotic cell (VMZ) is of sufficient quality if it is present in a valid stage of mitosis, namely the metaphase,
   - selecting sub-images (TB11) of the total image (B) and corresponding sub-images (TB12) of the segmented image (SB) on the basis of the detected image segments (VMZ) which each represent at least one mitotic cell (VMZ) of sufficient quality.

3. Method according to Claim 1,
   further comprising

   - determining respective measures of confidence (PI, PI*) for the respective actual presences of the respective fluorescence pattern types by means of the convolutional neural network (CNN2) on the basis of the selected sub-images (TB11) of the total image (B) and the selected sub-images (TB12) of the segmented image (SB).

4. Method according to Claim 3,

   wherein the convolutional neural network (CNN2) comprises an output layer (LP, AVS) which generates a respective feature map (FM1,..., FMN) for a respective cellular fluorescence pattern type,
   and wherein the convolutional neural network (CNN2) determines a respective measure of confidence (P1,...,

PN) on the basis of a respective feature map (FM1,..., FMN).

5. Method according to Claim 3,
further comprising

    - segmenting the total image (B) into image segments of different segment classes,
    - determining at least one brightness value (HI) for at least one fluorescence pattern type on the basis of one or more image segments of at least one particular segment class and
    - verifying the measure of confidence (PI, PI*) of the at least one fluorescence pattern type on the basis of the brightness value (HI) of the at least one fluorescence pattern type.

6. Method according to Claim 5,
wherein the verification of the measure of confidence (PI, PI*) is done on the basis of the brightness value (HI) and depending on a threshold value (H1,...,HN) specifiable by a user.

7. Method according to Claim 3,
further comprising, for a respective sub-image tuple (TB11, TB12) which comprises a sub-image (TB11) of the total image (B) and a corresponding sub-image (TB12) of the segmented image (SB),

    - determining respective sub-image measures of confidence (PI1,...,PI3) for respective actual sub-image presences of respective cellular fluorescence pattern types by means of the convolutional neural network (CNN2)
    - and determining the respective measures of confidence for the respective actual presences of the respective fluorescence pattern types on the basis of the sub-image measures of confidence.

8. Method according to Claim 1,
further comprising

    - dividing the total image (B) into a set of sub-images (TBA,..., TBD) according to a specified division scheme,
    - selecting sub-images (TBA, TBC) of the total image (B) on the basis of the detected image segments and selecting corresponding sub-images of the segmented image (SB)
    - and detecting respective actual presences of the respective cellular fluorescence pattern types by means of the convolutional neural network (CNN2) on the basis of the selected sub-images of the total image and on the basis of the selected sub-images of the segmented image.

9. Apparatus (V1) for detecting respective potential presences of respective different cellular fluorescence pattern types on a biological cellular substrate comprising human epithelioma cells by means of digital image processing, comprising

    - a holding device (HL) for the biological substrate (SU), which was incubated with a liquid patient sample which potentially comprises primary antibodies and, furthermore, with secondary antibodies which have been labelled with a fluorescent dye,
    - furthermore at least one image acquisition unit (K) for acquiring a total image (B) which represents staining of the cellular substrate due to the fluorescent dye,
    **characterized by** at least one computing unit (R) designed
    - to determine a segmented image (SB) by means of segmentation of the total image (B),
    - to detect in the segmented image (SB) respective image segments (VMZ) wherein a respective image segment represents a respective metaphase plate of a mitosis cell in a metaphase stage,
    - to select sub-images (TB11) of the total image (B) which each comprise at least one mitotic cell and corresponding sub-images (TB12) of the segmented image (SB) on the basis of the detected image segments and
    - to detect respective actual presences of the respective cellular fluorescence pattern types by means of a convolutional neural network (CNN2) on the basis of the selected sub-images (TB11) of the total image (B) and the selected sub-images (TB12) of the segmented image (SB), wherein the convolutional neural network (CNN2) processes, in each case, a tuple of sub-images at the same time, which comprises at least one selected sub-image of the total image and a corresponding selected sub-image of the segmented image.

10. Method for detecting respective potential presences of respective different cellular fluorescence pattern types on a biological cellular substrate comprising human epithelioma cells by means of digital image processing, comprising

- acquiring a total image (B) which represents staining of the cellular substrate due to the fluorescent dye,
**characterized by**
- determining a segmented image (SB) by means of segmentation of the total image (B),
- detecting in the segmented image (SB) respective image segments (VMZ) wherein a respective image segment represents a respective metaphase plate of a mitosis cell in a metaphase stage,
- selecting sub-images (TB11) of the total image (B) which each comprise at least one mitotic cell and corresponding sub-images of the segmented image on the basis of the detected image segments (VMZ) and
- detecting respective actual presences of the respective cellular fluorescence pattern types by means of a convolutional neural network (CNN2) on the basis of the selected sub-images of the total image and the selected sub-images of the segmented image, wherein the convolutional neural network (CNN2) processes, in each case, a tuple of sub-images at the same time, which comprises at least one selected sub-image of the total image and a corresponding selected sub-image of the segmented image.

11. Method for digital image processing, comprising

- receiving a total image (B) which represents staining of a biological cellular substrate due to a fluorescent dye, wherein the biological cellular substrate comprises human epithelioma cells,
**characterized by**
- determining a segmented image (SB) by means of segmentation of the total image (B),
- detecting in the segmented image (SB) respective image segments (VMZ) wherein a respective image segment represents a respective metaphase plate of a mitosis cell in a metaphase stage,
- selecting sub-images (TB11) of the total image (B) which each comprise at least one mitotic cell and corresponding sub-images (TB12) of the segmented image (SB) on the basis of the detected image segments (VMZ) and
- detecting respective actual presences of the respective cellular fluorescence pattern types by means of a convolutional neural network (CNN2) on the basis of the selected sub-images of the total image and the selected sub-images of the segmented image, wherein the convolutional neural network (CNN2) processes, in each case, a tuple of sub-images at the same time, which comprises at least one selected sub-image of the total image and a corresponding selected sub-image of the segmented image.

12. Computing unit (R) which, in the course of digital image processing, is designed

- to receive a total image (B) which represents staining of a biological cellular substrate due to a fluorescent dye, wherein the biological cellular substrate comprises human epithelioma cells,
charactered in that the computing unit (R) is further designed
- to determine a segmented image (SB) by means of segmentation of the total image (B),
- to detect in the segmented image (SB) respective image segments (VMZ) wherein a respective image segment represents a respective metaphase plate of a mitosis cell in a metaphase stage,
- to select sub-images (TB11) of the total image (B) which each comprise at least one mitotic cell and corresponding sub-images (TB12) of the segmented image (SB) on the basis of the detected image segments and
- to detect respective actual presences of the respective cellular fluorescence pattern types by means of a convolutional neural network (CNN2) on the basis of the selected sub-images (TB11) of the total image (B) and the selected sub-images (TB12) of the segmented image (SB), wherein the convolutional neural network (CNN2) processes, in each case, a tuple of sub-images at the same time, which comprises at least one selected sub-image of the total image and a corresponding selected sub-image of the segmented image.

13. Data network device (DV) comprising

at least one data interface (DS4) for receiving a total image (B) which represents staining of a biological cellular substrate due to a fluorescent dye, wherein the biological cellular substrate comprises human epithelioma cells, **characterized by** a computing unit (R) according to Claim 12.

14. Computer program product (CPP) comprising commands which, upon execution of the program by a computer (CO), prompt said computer to carry out the method for digital image processing according to Claim 11.

15. Data carrier signal (SIG2) which transmits the computer program product (CPP) according to Claim 14.

**Revendications**

1. Procédé permettant de détecter des présences potentielles respectives de types de motifs fluorescents cellulaires différents respectifs sur un substrat cellulaire biologique (SU) présentant des cellules d'un épithéliome humain,

   dans lequel les types de motifs fluorescents cellulaires comprennent plusieurs types de motifs fluorescents d'anticorps antinucléaires différents,
   le procédé présentant les étapes suivantes consistant à

      - incuber le substrat cellulaire (SU) avec un échantillon liquide d'un patient qui présente potentiellement des anticorps primaires, ainsi qu'en outre avec des anticorps secondaires qui sont marqués avec un colorant fluorescent,
      - acquérir une image globale (B) qui représente une coloration du substrat cellulaire (SU) par le colorant fluorescent,
      - déterminer une image segmentée (SB) au moyen d'une segmentation de l'image globale (B),
      - détecter des segments d'image respectifs sur l'image segmentée (SB), un segment d'image respectif représentant une plaque métaphasique respective d'une cellule en mitose dans un stade de la métaphase,

   **caractérisé par** les étapes consistant à :

      - sélectionner des images partielles (TB11) de l'image globale (B) qui présentent respectivement au moins une cellule mitotique (VMZ), et sélectionner des images partielles (TB12) qui y correspondent de l'image segmentée (SB) sur la base des segments d'image détectés (VMZ), et
      - détecter des présences réelles respectives de types respectifs des types de motifs fluorescents cellulaires au moyen d'un réseau neuronal convolutif (CNN2) sur la base des images partielles sélectionnées (TB11) de l'image globale (B) et des images partielles sélectionnées (TB12) de l'image segmentée (SB),

   dans lequel le réseau neuronal convolutif (CNN2) traite respectivement en même temps un tuple d'images partielles qui présente au moins une image partielle sélectionnée de l'image globale et une image partielle sélectionnée qui y correspond de l'image segmentée.

2. Procédé selon la revendication 1, présentant en outre les étapes consistant à

      - détecter des segments d'image respectifs (VMZ), qui représentent respectivement une cellule mitotique de qualité suffisante, sur l'image globale (B) sur la base de l'image segmentée (SB),
      dans lequel une cellule mitotique (VMZ) est de qualité suffisante si elle se trouve dans un stade de mitose valable, notamment en métaphase,
      - sélectionner des images partielles (TB11) de l'image globale (B) et des images partielles (TB12) qui y correspondent de l'image segmentée (SB) sur la base des segments d'image détectés (VMZ) qui représentent respectivement au moins une cellule mitotique (VMZ) de qualité suffisante.

3. Procédé selon la revendication 1, présentant en outre l'étape consistant à

      - déterminer des niveaux de confiance (PI, PI*) respectifs pour les présences réelles respectives des types de motifs fluorescents respectifs au moyen du réseau neuronal convolutif (CNN2) sur la base des images partielles sélectionnées (TB11) de l'image globale (B) et des images partielles sélectionnées (TB12) de l'image segmentée (SB).

4. Procédé selon la revendication 3,

   dans lequel le réseau neuronal convolutif (CNN2) présente une couche de sortie (LP, AVS) qui génère pour un type de motif fluorescent cellulaire respectif une carte de particularités respective (FM1, ..., FMN),
   et dans lequel le réseau neuronal convolutif (CNN2) détermine un niveau de confiance respectif (P1, ..., PN) sur la base d'une carte de particularités respective (FM1, ..., FMN).

5. Procédé selon la revendication 3, présentant en outre les étapes consistant à

      - segmenter l'image globale (B) en segments d'image de différentes classes de segment,

- déterminer au moins une valeur de luminosité (H) pour au moins un type de motif fluorescent sur la base d'un ou de plusieurs segments d'image d'au moins une certaine classe de segment, et
- vérifier le niveau de confiance (PI, PI*) dudit au moins un type de motif fluorescent sur la base de la valeur de luminosité (HI) dudit au moins un type de motif fluorescent.

6. Procédé selon la revendication 5, dans lequel la vérification du niveau de confiance (PI, PI*) est effectuée sur la base de la valeur de luminosité (HI) et en fonction d'une valeur seuil (H1, ..., HN) prédéfinissable par un utilisateur.

7. Procédé selon la revendication 3, présentant en outre, pour un tuple d'images partielles respectif (TB11, TB12), qui présente une image partielle (TB11) de l'image globale (B) et une image partielle correspondante (TB12) de l'image segmentée (SB), les étapes consistant à

- déterminer des niveaux de confiance d'image partielle respectifs (PI1, ..., PI3) pour des présences d'image partielle réelles respectives de types de motifs fluorescents cellulaires respectifs au moyen du réseau neuronal convolutif (CNN2),
- et déterminer les niveaux de confiance respectifs pour les présences réelles respectives des types de motifs fluorescents respectifs sur la base des niveaux de confiance d'image partielle.

8. Procédé selon la revendication 1, présentant en outre les étapes consistant à

- répartir l'image globale (B) en un ensemble d'images partielles (TBA, ..., TBD) selon un schéma de répartition prédéfini,
- sélectionner des images partielles (TBA, TBC) de l'image globale (B) sur la base des segments d'image détectés, et sélectionner des images partielles qui y correspondent de l'image segmentée (SB),
- et détecter des présences réelles respectives de types respectifs des types de motifs fluorescents cellulaires au moyen du réseau neuronal convolutif (CNN2) sur la base des images partielles sélectionnées de l'image globale et sur la base des images partielles sélectionnées de l'image segmentée.

9. Dispositif (V1) permettant de détecter des présences potentielles respectives de types de motifs fluorescents cellulaires différents respectifs sur un substrat cellulaire biologique présentant des cellules d'un épithéliome humain au moyen d'un traitement d'image numérique, présentant

- un dispositif de retenue (HL) pour le substrat biologique (SU) qui a été incubé avec un échantillon liquide d'un patient, qui présente potentiellement des anticorps primaires et en outre avec des anticorps secondaires qui sont marqués par un colorant fluorescent,
- en outre au moins une unité d'acquisition d'image (K) pour acquérir une image globale (B) qui représente une coloration du substrat cellulaire par le colorant fluorescent,
au moins une unité de calcul (R) qui est réalisée pour
- déterminer une image segmentée (SB) au moyen d'une segmentation de l'image globale (B),
détecter des segments d'image (SB) respectifs (VMZ) sur l'image segmentée, chaque segment d'image représentant une plaque métaphasique respective d'une cellule en mitose dans un stade de la métaphase, et

**caractérisé en ce que** l'unité de calcul est en outre réalisée pour :

- sélectionner des images partielles (TB11) de l'image globale (B), qui présentent respectivement au moins une cellule mitotique, et des images partielles (TB12) qui y correspondent de l'image segmentée (SB) sur la base des segments d'image détectés, et
détecter des présences réelles respectives de types respectifs des types de motifs fluorescents cellulaires au moyen d'un réseau neuronal convolutif (CNN2) sur la base des images partielles sélectionnées (TB11) de l'image globale (B) et des images partielles sélectionnées (TB12) de l'image segmentée (SB), dans lequel le réseau neuronal convolutif (CNN2) traite respectivement en même temps un tuple d'images partielles qui présente au moins une image partielle sélectionnée de l'image globale et une image partielle sélectionnée qui y correspond de l'image segmentée.

10. Procédé permettant de détecter des présences potentielles respectives de types de motifs fluorescents cellulaires différents respectifs sur un substrat cellulaire biologique présentant des cellules d'un épithéliome humain au moyen d'un traitement d'image numérique, présentant les étapes consistant à

- acquérir une image globale (B) qui représente une coloration du substrat cellulaire par le colorant fluorescent,
- déterminer une image segmentée (SB) au moyen d'une segmentation de l'image globale (B),
- détecter des segments d'image respectifs (VMZ) sur l'image segmentée (SB), un segment d'image respectif représentant une plaque métaphasique respective d'une cellule en mitose dans un stade de la métaphase,

**caractérisé par** les étapes consistant à :

- sélectionner des images partielles (TB11) de l'image globale (B) qui présentent respectivement au moins une cellule mitotique, et des images partielles qui y correspondent de l'image segmentée sur la base des segments d'image détectés (VMZ), et
détecter des présences réelles respectives de types respectifs des types de motifs fluorescents cellulaires au moyen d'un réseau neuronal convolutif (CNN2) sur la base des images partielles sélectionnées de l'image globale et des images partielles sélectionnées de l'image segmentée, dans lequel le réseau neuronal convolutif (CNN2) traite respectivement en même temps un tuple d'images partielles qui présente au moins une image partielle sélectionnée de l'image globale et une image partielle sélectionnée qui y correspond de l'image segmentée.

11. Procédé de traitement d'image numérique, présentant les étapes consistant à

- recevoir une image globale (B) qui représente une coloration d'un substrat cellulaire biologique par un colorant fluorescent, le substrat cellulaire biologique présentant des cellules d'un épithéliome humain,
- déterminer une image segmentée (SB) au moyen d'une segmentation de l'image globale (B),
- détecter des segments d'image respectifs (VMZ) sur l'image segmentée (SB), un segment d'image respectif représentant une plaque métaphasique respective d'une cellule en mitose dans un stade de la métaphase,

**caractérisé par** les étapes consistant à :

- sélectionner des images partielles (TB11) de l'image globale (B) qui présentent respectivement au moins une cellule mitotique, et des images partielles (TB12) qui y correspondent de l'image segmentée (SB) sur la base des segments d'image détectés (VMZ), et
détecter des présences réelles respectives de types respectifs des types de motifs fluorescents cellulaires au moyen d'un réseau neuronal convolutif (CNN2) sur la base des images partielles sélectionnées de l'image globale et des images partielles sélectionnées de l'image segmentée, dans lequel le réseau neuronal convolutif (CNN2) traite respectivement en même temps un tuple d'images partielles qui présente au moins une image partielle sélectionnée de l'image globale et une image partielle sélectionnée qui y correspond de l'image segmentée.

12. Unité de calcul (R) qui, dans le cadre d'un traitement d'image numérique, est réalisée pour

- recevoir une image globale (B) qui représente une coloration d'un substrat cellulaire biologique par un colorant fluorescent, le substrat cellulaire biologique présentant des cellules d'un épithéliome humain,
- déterminer une image segmentée (SB) au moyen d'une segmentation de l'image globale (B),
détecter des segments d'image respectifs (VMZ) sur l'image segmentée (SB), un segment d'image respectif représentant une plaque métaphasique respective d'une cellule en mitose dans un stade de la métaphase,

**caractérisée en ce que** l'unité de calcul est en outre réalisée pour

- sélectionner des images partielles (TB11) de l'image globale (B) qui présentent respectivement au moins une cellule mitotique, et sélectionner des images partielles (TB12) qui y correspondent de l'image segmentée (SB) sur la base des segments d'image détectés, et
détecter des présences réelles respectives de types respectifs des types de motifs fluorescents cellulaires au moyen d'un réseau neuronal convolutif (CNN2) sur la base des images partielles sélectionnées (TB11) de l'image globale (B) et des images partielles sélectionnées (TB12) de l'image segmentée (SB), dans lequel le réseau neuronal convolutif (CNN2) traite respectivement en même temps un tuple d'images partielles qui présente au moins une image partielle sélectionnée de l'image globale et une image partielle sélectionnée qui y correspond de l'image segmentée.

13. Dispositif de réseau de données (DV), présentant au moins une interface de données (DS4) pour recevoir une image globale (B) qui représente une coloration d'un substrat cellulaire biologique par un colorant fluorescent, le substrat cellulaire biologique présentant des cellules d'un épithéliome humain,
**caractérisé par** une unité de calcul (R) selon la revendication 12.

14. Produit de programme informatique (CPP), comprenant des instructions qui, lors de l'exécution du programme par un ordinateur (CO), font que celui-ci exécute le procédé de traitement d'image numérique selon la revendication 11.

15. Signal porteur de données (SIG2) qui transmet le produit de programme informatique (CPP) selon la revendication 14.

**FIG. 1**

**FIG. 2**

# FIG. 3

# FIG. 4

**FIG. 5**

Fig.6

Fig.7a

Fig.7b

Fig.7c

Fig.8

Fig.9

Fig.10a

SB

Fig.10b

LG

s=1

s=2

s=3

s=4

s=5

EP 4 030 340 B1

40

Fig.11

Fig.12

TBA, TB11

TBS, TB12

VMZ

VMZ

Fig.13

Fig.14a
TB11

Fig.14b
FM5

OLM5

Fig.14c
FM2

OLM2

Fig.15a

Fig.15b

Fig.16

Fig.17a

IZY

FG

NU

DO

DO

DO

Fig.17b

MP

MZY

Fig. 18

FIG. 19 (1/2)

**FIG. 19 (1/2)**

VS2

PS1 — conv2d_4: Conv2D

| | input: | (None, None, None, 8) |
|---|---|---|
| | output: | (None, None, None, 8) |

PS2 — conv2d_3: Conv2D

| | input: | (None, None, None, 8) |
|---|---|---|
| | output: | (None, None, None, 8) |

PS3 — max_pooling2d_1: MaxPooling2D

| | input: | (None, None, None, 8) |
|---|---|---|
| | output: | (None, None, None, 8) |

PS4 — conv2d_2: Conv2D

| | input: | (None, None, None, 8) |
|---|---|---|
| | output: | (None, None, None, 11) |

PS5 — concatenate_1: Concatenate

| | input: | (None, None, None, 8), (None, None, None, 8) |
|---|---|---|
| | output: | (None, None, None, 16) |

PS6 — conv2d_5: Conv2D

| | input: | (None, None, None, 16) |
|---|---|---|
| | output: | (None, None, None, 11) |

PS7 — batch_normalization_2: BatchNormalization

| | input: | (None, None, None, 11) |
|---|---|---|
| | output: | (None, None, None, 11) |

PS8 — activation_1: Activation

| | input: | (None, None, None, 11) |
|---|---|---|
| | output: | (None, None, None, 11) |

EP 4 030 340 B1

49

FIG. 19 (2/2)

| 1 |
|---|
| 2 |

PS9

| dropout_1: Dropout | input: | (None, None, None, 11) |
|---|---|---|
| | output: | (None, None, None, 11) |

PS10

| conv2d_6: Conv2D | input: | (None, None, None, 11) |
|---|---|---|
| | output: | (None, None, None, 11) |

PS11

| add_1: Add | input: | [(None, None, None, 11), (None, None, None, 11)] |
|---|---|---|
| | output: | (None, None, None, 11) |

PS12

| batch_normalization_3: BatchNormalization | input: | (None, None, None, 11) |
|---|---|---|
| | output: | (None, None, None, 11) |

PS13

| activation_2: Activation | input: | (None, None, None, 11) |
|---|---|---|
| | output: | (None, None, None, 11) |

PS14

| dropout_2: Dropout | input: | (None, None, None, 11) |
|---|---|---|
| | output: | (None, None, None, 11) |

FMAR

FMA1

L1

EP 4 030 340 B1

## FIG. 20 (1/2)

| 1 |
|---|
| 2 |

BI

PS21

| conv2d_1: Conv2D | input: | (None, 800, 800, 1) |
|---|---|---|
| | output: | (None, 800, 800, 32) |

PS22

| conv2d_2: Conv2D | input: | (None, 800, 800, 32) |
|---|---|---|
| | output: | (None, 800, 800, 32) |

PS23

| max_pooling2d_1: MaxPooling2D | input: | (None, 800, 800, 32) |
|---|---|---|
| | output: | (None, 400, 400, 32) |

PS24

| conv2d_3: Conv2D | input: | (None, 400, 400, 32) |
|---|---|---|
| | output: | (None, 400, 400, 64) |

PS25

| conv2d_4: Conv2D | input: | (None, 400, 400, 64) |
|---|---|---|
| | output: | (None, 400, 400, 64) |

PS26

| max_pooling2d_2: MaxPooling2D | input: | (None, 400, 400, 64) |
|---|---|---|
| | output: | (None, 200, 200, 64) |

PS27

| conv2d_5: Conv2D | input: | (None, 200, 200, 64) |
|---|---|---|
| | output: | (None, 200, 200, 128) |

PS28

| conv2d_6: Conv2D | input: | (None, 200, 200, 128) |
|---|---|---|
| | output: | (None, 200, 200, 128) |

PS29

| conv2d_transpose_1: Conv2DTranspose | input: | (None, 400, 400, 128) |
|---|---|---|
| | output: | (None, 400, 400, 64) |

# FIG. 20 (2/2)

| 1 |
|---|
| **2** |

PS30

| concatenate_1: Concatenate | input: | (None, 400, 400, 64), (None, 400, 400, 64) |
|---|---|---|
| | output: | (None, 400, 400, 128) |

PS31

| conv2d_7: Conv2D | input: | (None, 400, 400, 128) |
|---|---|---|
| | output: | (None, 400, 400, 64) |

PS32

| conv2d_8: Conv2D | input: | (None, 400, 400, 64) |
|---|---|---|
| | output: | (None, 400, 400, 64) |

PS33

| conv2d_transpose_2: Conv2DTranspose | input: | (None, 400, 400, 64) |
|---|---|---|
| | output: | (None, 800, 800, 32) |

PS34

| concatenate_2: Concatenate | input: | [(None, 800, 800, 32),   (None, 800, 800, 32)] |
|---|---|---|
| | output: | (None, 800, 800, 64) |

PS35

| conv2d_9: Conv2D | input: | (None, 800, 800, 64) |
|---|---|---|
| | output: | (None, 800, 800, 32) |

PS36

| conv2d_10: Conv2D | input: | (None, 800, 800, 32) |
|---|---|---|
| | output: | (None, 800, 800, 32) |

PS37

| conv2d_11: Conv2D | input: | (None, 800, 800, 32) |
|---|---|---|
| | output: | (None, 800, 800, 6) |

MS

M1

CNNS

## Fig.21a

## Fig.21b

# Fig. 22

| Muster | TA | FA | TR | FR | Sens | Spez | Overall | Anzahl |
|---|---|---|---|---|---|---|---|---|
| AC-1; n=2 | 38 | 9 | 326 | 12 | 0,76 | 0,97313433 | 0,94545455 | 385 |
| AC-2; n=4 | 22 | 3 | 360 | 0 | 1 | 0,99173554 | 0,99220779 | 385 |
| AC-3; n=3 | 22 | 0 | 363 | 0 | 1 | 1 | 1 | 385 |
| Nucleäre Punkte (AC-6,7); n= 6 | 21 | 6 | 354 | 4 | 0,84 | 0,98333333 | 0,97402597 | 385 |
| Granulaere; n = 5 | 81 | 37 | 259 | 8 | 0,91011236 | 0,875 | 0,88311688 | 385 |
| Nucleär Randständig (AC-11,12); n=8 | 25 | 3 | 356 | 1 | 0,96153846 | 0,99164345 | 0,98961039 | 385 |
| negativ (AC-0); n=1 | 113 | 8 | 238 | 26 | 0,81294964 | 0,96747967 | 0,91168831 | 385 |
| Nucleolaere (AC-8,9, 10); n=7 | 24 | 5 | 356 | 0 | 1 | 0,98614958 | 0,98701299 | 385 |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- A CNN Based HEp-2 Specimen Image Segmentation and Identification of Mitotic Spindle Type Specimens. **GUPTA KRATI et al.** ADVANCES IN DATABASES AND INFORMATION SYSTEMS; [LECTURE NOTES IN COMPUTER SCIENCE. SPRINGER INTERNATIONAL PUBLISHING, 22. August 2019